(19) Europäisches Patentamt
European Patent Office
Office européen des brevets

(11) EP 4 538 319 A1

(12) EUROPEAN PATENT APPLICATION
published in accordance with Art. 153(4) EPC

(43) Date of publication:
**16.04.2025 Bulletin 2025/16**

(21) Application number: **23819938.4**

(22) Date of filing: **12.06.2023**

(51) International Patent Classification (IPC):
***C08J 9/16*** (2006.01) ***C08K 3/32*** (2006.01)
***C08K 5/49*** (2006.01) ***C08L 67/00*** (2006.01)
***C08L 79/04*** (2006.01)

(52) Cooperative Patent Classification (CPC):
**C08J 9/16; C08K 3/32; C08K 5/49; C08L 67/00; C08L 79/04;** Y02E 60/10

(86) International application number:
**PCT/JP2023/021721**

(87) International publication number:
**WO 2023/238958 (14.12.2023 Gazette 2023/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.06.2022 JP 2022094483**

(71) Applicant: **Sekisui Kasei Co., Ltd.**
**Kita-ku**
**Osaka-shi**
**Osaka 530-8565 (JP)**

(72) Inventors:
- **ENDO Shota**
  **Osaka-shi, Osaka 530-8565 (JP)**
- **TAZUMI Kohei**
  **Osaka-shi, Osaka 530-8565 (JP)**
- **KUWABARA Yusuke**
  **Osaka-shi, Osaka 530-8565 (JP)**
- **TAI Tetsuro**
  **Osaka-shi, Osaka 530-8565 (JP)**

(74) Representative: **Hoffmann Eitle**
**Patent- und Rechtsanwälte PartmbB**
**Arabellastraße 30**
**81925 München (DE)**

(54) **FOAMED THERMOPLASTIC RESIN PARTICLES, MOLDED BODY OF FOAMED THERMOPLASTIC RESIN PARTICLES, FOAMED RESIN COMPOSITE, METHOD FOR PRODUCING FOAMED THERMOPLASTIC RESIN PARTICLES, AND METHOD FOR PRODUCING MOLDED BODY OF FOAMED THERMOPLASTIC RESIN PARTICLES**

(57) Foamed thermoplastic resin particles including a thermoplastic resin, in which the thermoplastic resin includes a polyester-based resin, a polyimide-based resin, and a phosphorus-based flame retardant, an amount of the polyimide-based resin is 5% to 45% by mass with respect to a total mass of the thermoplastic resin, and an amount of phosphorus is 0.15% to 1.00% by mass with respect to the total mass of the thermoplastic resin. The amount of the polyimide-based resin is preferably 25% to 45% by mass.

FIG. 5

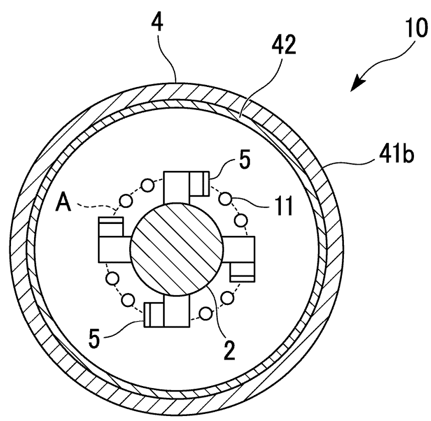


EP 4 538 319 A1

## Description

TECHNICAL FIELD

The present invention relates to foamed thermoplastic resin particles, a molded body of foamed thermoplastic resin particles, a foamed resin composite, a method for producing foamed thermoplastic resin particles, and a method for producing a molded body of foamed thermoplastic resin particles.

Priority is claimed on Japanese Patent Application No. 2022-094483, filed June 10, 2022, the content of which is incorporated herein by reference.

BACKGROUND ART

A molded body (molded body of foamed thermoplastic resin particles) of foamed particles containing a thermoplastic resin (foamed thermoplastic resin particles) is lightweight and excellent in terms of thermal insulation properties, shock absorbing properties, and mechanical strength. For this reason, application of molded bodies of foamed thermoplastic resin particles (also simply referred to as "molded bodies of foamed particles") to automobiles, aircraft, railway vehicles, and the like is currently under consideration.

Among thermoplastic resins, polyester-based resins such as polyethylene terephthalate (PET) can be used to produce molded bodies of foamed particles having excellent rigidity and heat resistance, and thus, researches on molded bodies of foamed particles using polyester-based resins are in progress.

As an example of the method for producing a molded body of foamed particles, in-mold foam molding may be mentioned. An explanation is given below on the in-mold foam molding. Foamed thermoplastic resin particles (also simply referred to as "foamed particles") are filled into the cavity of a mold. The foamed particles in the cavity are heated and foamed using a heating medium such as hot water or steam to form secondary foamed particles, and the secondary foamed particles are thermally fusion-bonded and integrated with each other by the foaming pressure of the foamed particles, thereby obtaining a molded body of foamed particles having a desired shape.

The glass transition temperature Tg of a polyester-based resin is lower than the glass transition temperature Tg of a polystyrene-based resin. For this reason, a molded body of foamed particles of a polyester-based resin becomes soft when heated (has low heat-resistant strength). In the related art, for the purpose of improving the heat-resistant strength, foamed thermoplastic resin particles and a molded body of foamed particles, which contain a polyester-based resin and a polyimide-based resin and have a single glass transition temperature Tg, have been proposed (Patent Document 1).

In addition, in some specific use applications, molded bodies of foamed particles are required to have flame retardance.

For example, Patent Document 2 proposes a molded body of foamed thermoplastic resin particles containing a polyphenylene ether-based resin as an amorphous resin, and a flame retardant. Furthermore, Patent Document 3 proposes a polyester-based resin foamed body containing a polyester-based resin as a crystalline resin, and a bromine-based flame retardant. Further, for example, Patent Document 4 proposes a flame-retardant polyester-based resin foamed body containing a polyester-based resin and a polyarylate resin.

Citation List

Patent Documents

Patent Document 1: Japanese Unexamined Patent Application, First Publication No. 2022-57468

Patent Document 2: PCT International Publication No. WO 2011/019057

Patent Document 3: Japanese Unexamined Patent Application, First Publication No. 2006-249158

Patent Document 4: Japanese Unexamined Patent Application, First Publication No. 2000-63553

SUMMARY OF INVENTION

Technical Problem

However, while the invention of Patent Document 1 increases the heat-resistant strength, flame retardance is not

considered. In addition, when the blending amount of the polyimide-based resin is increased in order to further increase the heat-resistant strength, a special molding machine is necessaitated, which can perform in-mold foam molding by increasing the vapor pressure. For this reason, when a general-purpose molding machine is used, a molded body of foamed particles cannot be molded into a desired shape (moldability is low).

The invention of Patent Document 2 provides flame retardance; however, since the invention uses an amorphous resin, the product of this invention is likely to undergo elongation or shrinkage when the temperature is increased by heating or the like. That is, the invention of Patent Document 2 has low dimensional stability under heat and poor heat resistance.

In the invention of Patent Document 3, improvement of flame retardance is attempted by using a bromine-based flame retardant; however, there is a demand for greater consideration of the environment.

The invention of Patent Document 4 relates to a foamed sheet, and does not consider foamed thermoplastic resin particles and application thereof to molded bodies.

Therefore, an object of the present invention is to provide foamed thermoplastic resin particles having excellent flame retardance and heat resistance and having excellent moldability into a molded body of foamed particles.

Solution to Problem

In general, an unfoamed resin containing a flame retardant exhibits excellent flame retardance. However, the flame retardance of a foamed resin containing a flame retardant is significantly lower compared to that of an unfoamed resin containing a flame retardant.

Furthermore, a foamed resin has a small amount of resin per unit volume compared to an unfoamed resin, which contributes to resource saving. However, since a foamed resin has a small amount of resin per unit volume is small, it is difficult for the foamed resin to form a carbonized layer when combusted, and the combustion time is lengthened. It is thought that for this reason, the flame retardance of the foamed resin is reduced.

In addition, as the foamed resin has a smaller amount of resin per unit volume compared to the unfoamed resin, the foamed resin is more easily softened by the combustion heat, and resin dripping during combustion is likely to occur. In addition, when a foamed resin containing a crystalline resin melts during combustion, a rapid decrease in viscosity occurs. For this reason, the foamed resin is likely to cause resin dripping during combustion.

When the flame retardant content in the foamed resin is increased in order to enhance flame retardance, the flame retardance is improved, but the mechanical properties are lowered. In addition, since flame retardants have an action of plasticizing resins, when the flame retardant content is increased, adverse effects occur, such as a decrease in heat resistance of the foamed resin and inhibition of the foamability due to a decrease in elongational viscosity.

Furthermore, as in Patent Document 4, when the amount of a super engineering plastic such as a polyarylate resin is increased, the foamability of the foamed thermoplastic resin particles is lowered, and the foamed particle moldability is lowered.

Thus, simply blending a flame retardant into the foamed resin is not enough to provide desired physical properties.

The inventors of the present invention conducted intensive studies, and as a result, they found that, by setting the amount of a polyimide-based resin to a specific range and setting the amount of a phosphorus-based flame retardant to a specific range, flame retardance and heat resistance are increased, and moldability is increased, thus completing the present invention.

That is, the present invention has the following aspects.

<1> Foamed thermoplastic resin particles including a thermoplastic resin,

in which the thermoplastic resin includes a polyester-based resin, a polyimide-based resin, and a phosphorus-based flame retardant,
an amount of the polyimide-based resin is 5% to 45% by mass with respect to a total mass of the thermoplastic resin, and
an amount of phosphorus is 0.15% to 1.00% by mass with respect to the total mass of the thermoplastic resin.

<2> The foamed thermoplastic resin particles according to <1>, in which the anount of the polyimide-based resin is 25% to 45% by mass with respect to the total mass of the thermoplastic resin.
<3> The foamed thermoplastic resin particles according to <1> or <2>, which has a glass transition temperature Tg of 80°C to 130°C.
<4> A molded body of foamed thermoplastic resin particles, including a thermoplastic resin and formed by two or more foamed thermoplastic resin particles that are thermally fusion-bonded with each other,

in which the thermoplastic resin includes a polyester-based resin, a polyimide-based resin, and a phosphorus-based flame retardant,

an amount of the polyimide-based resin is 5% to 45% by mass with respect to a total mass of the thermoplastic resin, and

an amount of phosphorus is 0.15% to 1.00% by mass with respect to the total mass of the thermoplastic resin.

<5> The molded body according to <4>, in which flame retardance measured in accordance with a UL-94 vertical method (11 mm vertical burning test) of UL standards is V-0, V-1, of V-2.

<6> The molded body according to <4>, in which the amount of the polyimide-based resin is 25% to 45% by mass with respect to the total mass of the thermoplastic resin.

<7> The molded body according to <6>, in which flame retardance measured in accordance with a UL-94 vertical method (11 mm vertical burning test) of UL standards is V-0 or V-1.

<8> The molded body according to any one of <4> to <7>, which has a glass transition temperature Tg of 80°C to 130°C.

<8-1> The foamed thermoplastic resin particles or the molded body according to any one of <1> to <8>, in which the polyester-based resin is at least one selected from the group consisting of a polyethylene terephthalate resin (PET), a polybutylene terephthalate resin (PBT), a polyethylene naphthalate resin (PEN), a polyethylene furanoate resin (PEF), a polybutylene naphthalate resin (PBN), a polytrimethylene terephthalate resin (PTT), a copolymer of terephthalic acid, ethylene glycol, and cyclohexanedimethanol, and a mixture thereof.

<8-2> The foamed thermoplastic resin particles or the molded body according to any one of <1> to <8>, in which the polyester-based resin is a polyethylene terephthalate resin.

<8-3> The foamed thermoplastic resin particles or the molded body according to any one of <1> to <8>, in which the polyester-based resin is a crystalline polyethylene terephthalate resin (C-PET).

<8-3> The foamed thermoplastic resin particles or the molded body according to any one of <1> to <8>, in which the polyester-based resin is at least one selected from the group consisting of a petrochemical-derived polyester-based resin and a plant-origin polyester-based resin (for example, a polyethylene terephthalate resin, a plant-origin polyethylene furanoate resin, and a plant-origin polytrimethylene terephthalate resin).

<8-4> The foamed thermoplastic resin particles or the molded body according to any one of <1> to <8-3>, in which the polyimide-based resin is a compound represented by the following Formula (3):

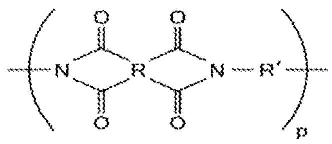

$$\cdots(3)$$

[In Formula (3), R is an aromatic group having 6 to 42 carbon atoms; R' is at least one divalent organic group selected from the group consisting of a divalent aromatic group having 6 to 30 carbon atoms, an aliphatic group having 2 to 30 carbon atoms, and an alicyclic group having 4 to 30 carbon atoms; and p is a number of repeating unit.]

<8-5> The foamed thermoplastic resin particles or the molded body according to any one of <1> to <8-4>, in which the amount of the polyimide-based resin is 25% to 40% by mass with respect to the total mass of the thermoplastic resin.

<8-6> The foamed thermoplastic resin particles or the molded body according to any one of <1> to <8-5>, in which the phosphorus-based flame retardant is at least one selected from the group consisting of a phosphate-based compound, a polyphosphoric acid-based compound, red phosphorus, an organic phosphoric acid ester compound, a phosphazene compound, a phosphonic acid compound, a phosphinic acid compound, a phosphine oxide compound, a phosphorane compound, and a phosphoramide compound.

<8-7> The foamed thermoplastic resin particles or the molded body according to <8-6>, in which the phosphate-based compound is at least one selected from the group consisting of melamine phosphate, guanidine phosphate, ammonium phosphate, amide ammonium phosphate, and carbamate phosphate, and the polyphosphoric acid-based compound is at least one selected from the group consisting of melamine polyphosphate, guanidine polyphosphate, ammonium polyphosphate, amide ammonium polyphosphate, and carbamate polyphosphate.

<8-8> The foamed thermoplastic resin particles or the molded body according to any one of <1> to <8-7>, in which the amount of phosphorus is 0.25% to 0.80% by mass with respect to the total mass of the thermoplastic resin.

<8-9> The foamed thermoplastic resin particles or the molded body according to any one of <1> to <8-8>, in which:

the amount of the polyimide-based resin is 30% to 40% by mass with respect to the total mass of the thermoplastic resin,

the amount of the phosphorus is 0.30% to 0.66% by mass with respect to the total mass of the thermoplastic resin,

a crystallinity of the foamed thermoplastic resin particles is 3.3% to 6.3%, and
a glass transition temperature Tg is 91.2°C to 94.5°C.

<8-10> The foamed thermoplastic resin particles or the molded body according to any one of <1> to <8-9>, in which an open cell ratio of the foamed thermoplastic resin particles is 3.4% to 16%.
<9> A foamed resin composite including:

the molded bodyof any one of <4> to <8-10>; and
a fiber-reinforced resin layer provided on at least a portion of a surface of the molded body of foamed thermoplastic resin particles.

<10> A method for producing foamed thermoplastic resin particles, the method including:

a step of extruding a thermoplastic resin composition containing a thermoplastic resin and a foaming agent, and foaming the thermoplastic resin composition to obtain foamed thermoplastic resin particles,
in which the thermoplastic resin contains a polyester-based resin, a polyimide-based resin, and a phosphorus-based flame retardant,
an amount of the polyimide-based resin is 5% to 45% by mass with respect to a total mass of the thermoplastic resin, and
an amount of phosphorus is 0.15% to 1.00% by mass with respect to the total mass of the thermoplastic resin.

<11> The method for producing foamed thermoplastic resin particles according to <10>, in which the amount of the polyimide-based resin is 25% to 45% by mass with respect to the total mass of the thermoplastic resin.
<12> A method for producing a molded body of foamed thermoplastic resin particles, the method including: obtaining the foamed thermoplastic resin particles by the method of <10> or <11>, filling a cavity of a mold with the obtained foamed thermoplastic resin particles, heating the foamed thermoplastic resin particles in the cavity to obtain secondary foamed particles, and thermally fusion-bonding the secondary foamed particles to obtain the molded body of foamed thermoplastic resin particles.
<13> A cell case or a battery case, including the molded body of any one of <4> to <8-10>.

Advantageous Effects of Invention

According to the foamed thermoplastic resin particles of the present invention, flame retardance and heat resistance of the molded body of foamed particles are enhanced, and moldability is enhanced.

BRIEF DESCRIPTION OF DRAWINGS

[FIG. 1] A flowchart showing an example of a production process for a plant-origin polyester-based resin.
[FIG. 2] A flowchart showing an example of a production process for a plant-origin polyester-based resin.
[FIG. 3] A flowchart showing an example of a production process for a plant-origin polyester-based resin.
[FIG. 4] A schematic lateral cross-sectional view showing an example of an apparatus for producing the foamed thermoplastic resin particles of the present invention.
[FIG. 5] A schematic front view showing an example of the apparatus for producing the foamed thermoplastic resin particles of the present invention.
[FIG. 6] A schematic front view showing an example of the apparatus for producing the foamed thermoplastic resin particles of the present invention.
[FIG. 7] A cross-sectional view of a foamed resin composite of the present invention.

DESCRIPTION OF EMBODIMENTS

In the present text, the term "to" represents a range including the values at both ends thereof as a lower limit value and an upper limit value.

(Foamed thermoplastic resin particles)

The foamed thermoplastic resin particles (foamed particles) of the present invention contain a thermoplastic

resin. The foamed particles are particles obtained by granulating a thermoplastic resin composition (hereinafter, also simply referred to as a "resin composition") containing a thermoplastic resin and a foaming agent and foaming the granulation product.

A foamed particle is a particulate foam. The foamed particles are used as a raw material for a molded body of foamed thermoplastic resin particles (molded body of foamed particles) molded by so-called in-mold foam molding.

<Thermoplastic resin>

The thermoplastic resin of the foamed particles includes a polyester-based resin, a polyimide-based resin, and a phosphorus-based flame retardant. Since the foamed particles of the present invention contain both a polyester-based resin and a polyimide-based resin, the foamed particles can increase the heat-resistant strength of a molded body of foamed particles. In addition, since the foamed particles of the present invention contain a phosphorus-based flame retardant, the foamed particles impart flame retardance to a molded body of foamed particles.

<<Polyester-based resin>>

Examples of the polyester-based resin include a polyethylene terephthalate resin (PET), a polybutylene terephthalate resin (PBT), a polyethylene naphthalate resin (PEN), a polyethylene furanoate resin (PEF), a polybutylene naphthalate resin (PBN), a polytrimethylene terephthalate resin (PTT), a copolymer of terephthalic acid, ethylene glycol, and cyclohexanedimethanol, and a mixture thereof. As the polyester-based resin, a polyethylene terephthalate resin is preferable, and a crystalline polyethylene terephthalate resin (C-PET) is more preferable. C-PET is a polyester-based resin in which the acid component is terephthalic acid and the glycol component is ethylene glycol.

The polyester-based resin may be a petrochemical-derived polyester-based resin, may be a plant-origin polyester-based resin such as so-called bio-PET, or may be a mixture thereof. Examples of the plant-origin polyester-based resin include a polyethylene terephthalate resin, a plant-origin polyethylene furanoate resin, and a plant-origin polytrimethylene terephthalate resin.

Furthermore, the polyester-based resin may be a recycled raw material.

For these polyester-based resins, one kind may be used alone, or two or more kinds may be used in combination.

Hereinbelow, the plant-origin polyester-based resin is described.

The plant-origin polyester resin is a polymer derived from a plant raw material such as sugar cane or corn. An expression such as "originate from a plant raw material" encompasses polymers synthesized or extracted from plant raw materials. Furthermore, for example, the expression such as "originate from a plant raw material" encompasses polymers obtained by polymerizing monomers synthesized or extracted from plant raw materials. The "monomers synthesized or extracted from plant raw materials" encompasses monomers synthesized from compounds synthesized or extracted from plant raw materials as raw materials. The plant-origin polyester-based resin encompasses a resin in which a portion of its monomers "originates from a plant raw material."

The plant-origin polyester-based resin will be described with PET and PEF as examples.

A synthesis reaction for PET is shown in Formula (1). PET is synthesized by a dehydration reaction of n moles of ethylene glycol and n moles of terephthalic acid (Benzen-1,4-dicarboxylic acid). A stoichiometric mass ratio in this synthesis reaction is ethylene glycol:terephthalic acid = 30:70 (mass ratio).

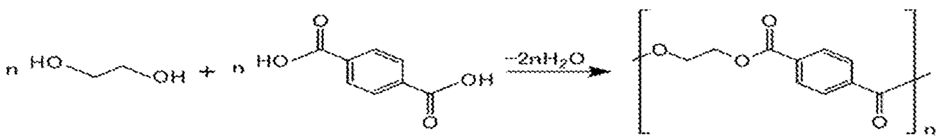


・・・(1)

[(in Formula (1), n is a stoichiometric coefficient (degree of polymerization) and is a number of 250 to 1,100.]

Ethylene glycol is industrially produced by oxidizing and hydrating ethylene. Furthermore, terephthalic acid is industrially produced by oxidizing paraxylene.

In this context, as shown in FIG. 1, when ethylene is obtained by a dehydration reaction of a plant-origin ethanol (bioethanol), and PET is synthesized from ethylene glycol synthesized from this ethylene (bioethanol-derived ethylene glycol) and a petrochemical-derived terephthalic acid, the PET produced is a PET of which 30% by mass of the monomers are plant-origin monomers.

Furthermore, as shown in FIG. 2, when paraxylene is obtained by a dehydration reaction of a plant-origin isobutanol (bioisobutanol), and PET is synthesized from terephthalic acid synthesized from this paraxylene, and a bioethanol-origin ethylene glycol, the PET produced is a PET of which 100% by mass of the monomers are plant-origin

monomers.

A synthesis reaction for PEF is shown in Formula (2). PEF is synthesized by a dehydration reaction of n moles of ethylene glycol and n moles of furandicarboxylic acid (2,5-furandicarboxylic acid).

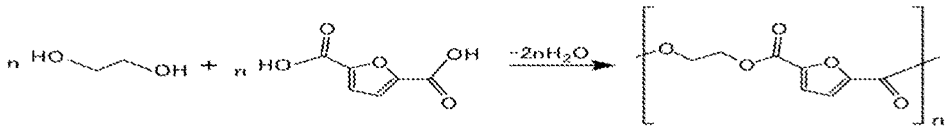


...(2)

[In Formula (2), n is a stoichiometric coefficient (degree of polymerization) and is a number of 250 to 1100.]

Furandicarboxylic acid (FDCA) is obtained by, for example, obtaining hydroxymethylfurfural (HMF) by a dehydration reaction of plant-origin fructose or glucose, and oxidizing the HMF.

As shown in FIG. 3, when both FDCA and ethylene glycol are plant-origin compounds, the PEF produced is a PEF of which 100% by mass of the monomers are plant-origin monomers.

The proportion of the polyester-based resin with respect to the total mass of the thermoplastic resin contained in the foamed particles is preferably 55% to 95% by mass, more preferably 55% to 75% by mass, still more preferably 60% to 75% by mass, and particularly preferably 60% to 70% by mass. When the proportion of the polyester-based resin is equal to or greater than the above-described lower limit value, moldability is enhanced. When the proportion of the polyester-based resin is equal to or less than the above-described upper limit value, the heat-resistant strength is further increased.

<<Polyimide-based resin>>

As the polyimide-based resin, a polymer containing a cyclic imide group as a repeating unit is preferable, and a polymer having a melt-molded body is more preferable. Examples thereof include polyetherimides described in United States Patent No. 4141927, Japanese Patent No. 2622678, Japanese Patent No. 2606912, Japanese Patent No. 2606914, Japanese Patent No. 2596565, Japanese Patent No. 2596566, and Japanese Patent No. 2598478; and polymers described in Japanese Patent No. 2598536, Japanese Patent No. 2599171, Japanese Unexamined Patent Application, First Publication No. H9-48852, Japanese Patent No. 2565556, Japanese Patent No. 2564636, Japanese Patent No. 2564637, Japanese Patent No. 2563548, Japanese Patent No. 2563547, Japanese Patent No. 2558341, Japanese Patent No. 2558339, and Japanese Patent No. 2834580. As long as the effects of the present invention are not impaired, the polyimide-based resin may contain a structural unit other than a cyclic imide in the main chain. Examples of the structural unit other than the cyclic imide include an aromatic, aliphatic, alicyclic, or alicyclic ester unit, and an oxycarbonyl unit.

Furthermore, the polyimide-based resin may be a recycled raw material. The polyimide-based resin may be a plant-origin resin such as a biopolyimide.

These polyimide-based resins may be used singly or in combination of two or more kinds thereof.

The polyimide-based resin is preferably, for example, a compound represented by the following Formula (3).

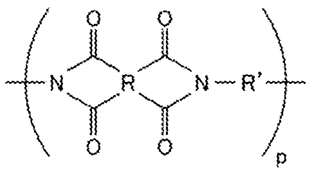

...(3)

[In Formula (3), R is an aromatic group having 6 to 42 carbon atoms; R' is at least one divalent organic group selected from the group consisting of a divalent aromatic group having 6 to 30 carbon atoms, an aliphatic group having 2 to 30 carbon atoms, and an alicyclic group having 4 to 30 carbon atoms; and p is a number representing a repeating unit.]

From the viewpoint of enhancing compatibility with the polyester-based resin, the polyimide-based resin is preferably a polyetherimide-based resin having a structural unit having an ether bond.

The polyimide-based resin can be prepared by a conventionally known production method. The polyimide-based resin is obtained by, for example, performing dehydration-condensation of any one or both of a tetracarboxylic acid and an acid anhydride thereof, which are raw materials capable of conversion into R in Formula (3), and one kind or two or more kinds of compounds selected from the group consisting of an aliphatic primary diamine and an aromatic primary diamine, which are raw materials capable of conversion into R' in Formula (3). A specific example of a method for producing a polyimide-based resin is a method in which a polyamic acid is obtained and then subjected to ring closure by heating. Alternative examples include a method of performing chemical ring closure using an acid anhydride and a chemical ring

closure agent such as pyridine or carbodiimide, a method that includes heating the above-described tetracarboxylic acid anhydride and a diisocyanate capable of conversion into the above-described R' to perform decarboxylation, and then performing polymerization.

Examples of the tetracarboxylic acid include pyromellitic acid, 1,2,3,4-benzenetetracarboxylic acid, 3,3',4,4'-biphenyltetracarboxylic acid, 2,2',3,3'-biphenyltetracarboxylic acid, 3,3',4,4'-benzophenonetetracarboxylic acid, 2,2',3,3'-benzophenonetetracarboxylic acid, bis(2,3-dicarboxyphenyl)methane, bis(3,4-dicarboxyphenyl)methane, 1,1'-bis(2,3-dicarboxyphenyl)ethane, 2,2'-bis(3,4-dicarboxyphenyl)propane, 2,2'-bis(2,3-dicarboxyphenyl)propane, bis(3,4-dicarboxyphenyl)ether, bis(2,3-dicarboxyphenyl)ether, bis(3,4-dicarboxyphenyl)sulfone, bis(2,3-dicarboxyphenyl)sulfone, 2,3,6,7-naphthalenetetracarboxylic acid, 1,4,5,8-naphthalenetetracarboxylic acid, 1,2,5,6-naphthalenetetracarboxylic acid, 2,2'-bis[(2,3-dicarboxyphenoxy)phenyl]propane, and acid anhydrides thereof.

Examples of the diamine include benzidine, diaminodiphenylmethane, diaminodiphenylethane, diaminodiphenylpropane, diaminodiphenylbutane, diaminodiphenyl ether, diaminodiphenyl sulfone, diaminodiphenyl benzophenone, o-, m-, and p-phenylenediamine, tolylenediamine, xylenediamine, and aromatic primary diamines having hydrocarbon groups of these aromatic primary diamines in a structural unit; ethylenediamine, 1,2-propanediamine, 1,3-propanediamine, 2,2-dimethyl-1,3-propanediamine, 1,6-hexamethylenediamine, 1,8-octamethylenediamine, 1,9-nonamethylenediamine, 1,10-decamethylenediamine, 1,11-undecamethylenediamine, 1,12-dodecamethylenediamine, 2,2,4-trimethylhexamethylenediamine, 2,4,4-trimethylhexamethylenediamine, 1,3-cyclohexanediamine, 1,4-cyclohexanediamine, 1,4-cyclohexanedimethylamine, 2-methyl-1,3-cyclohexanediamine, isophoronediamine, and aliphatic and alicyclic primary diamines having hydrocarbon groups of these aliphatic and alicyclic primary diamines in a structural unit.

The proportion of the polyimide-based resin with respect to the total mass of the thermoplastic resin contained in the foamed particles is 5% to 45% by mass, preferably 25% to 45% by mass, and more preferably 25% to 40% by mass. When the proportion of the polyimide-based resin is equal to or greater than the above-described lower limit value, the heat-resistant strength is further increased, and the flame retardance is further enhanced. When the proportion of the polyimide-based resin is equal to or less than the above-described upper limit value, moldability is further enhanced.

[Method for measuring proportion of polyimide-based resin]

When it is necessary to know the proportion of the polyimide-based resin with respect to the total mass of the thermoplastic resin contained in the foamed particles and the molded body of foamed particles that are described in a later section, the proportion of the polyimide-based resin can be measured by the following method. For example, a slice sample (for example, a sample having a thickness of 0.2 mm) may be prepared by slicing the foamed particles and the molded body of foamed particles, and the proportion of the polyimide-based resin with respect to this sample may be measured. An example of a method of measuring the proportion of a polyimide-based resin with respect to the total mass of a mixed resin of a polyester-based resin and a polyimide-based resin is described below.

A sample having a thickness of 0.2 mm is cut out from the foamed particles and the molded body of foamed particles, and this sample is used as a measurement sample. Infrared spectroscopic analysis of the surface of the measurement sample is carried out under the following conditions to obtain infrared absorption spectrum.

- · Measuring apparatus: "Nicolet iS10" Fourier transform infrared spectrophotometer manufactured by Thermo SCIENTIFIC, Inc. and single reflection type horizontal ATR Smart-iTR manufactured by Thermo SCIENTIFIC, Inc.
- · ATR crystal: diamond attached KRS-5 (angle = 42°).
- · Measurement method: single reflection type ATR method.
- · Measurement wave number range: 4,000 $cm^{-1}$ to 675 $cm^{-1}$.
- · Wave number dependence of measurement depth: not corrected.
- · Detector: deuterated triglycine sulfate (DTGS) detector and KBr beam splitter.
- · Resolution: 4 $cm^{-1}$.
- · Cumulative number: 16 times (the same applies to the background measurement).

From the obtained chart of infrared absorption spectrum, the peak heights of D1410 and D1778 are obtained, and the proportion of the polyimide-based resin is calculated from the following equation (p) obtained from a calibration curve created using standard samples.

Proportion (% by mass) of polyimide-based resin = $100 - \{1.987 \times R^2 + 19.589 \times R + 22.44\}$ ... (p) (p)

$$R = D1410/D1778$$

D1410 means the maximum value of the difference in absorbance (measured absorbance - absorbance of baseline) between the region of wave number 1410 $cm^{-1}$ ± 5 $cm^{-1}$ originating from the polyester-based resin and the baseline in the infrared absorption spectrum curve. The baseline is a straight line connecting the position of minimum absorption at a wave number of 1400 $cm^{-1}$ ± 5 $cm^{-1}$ in the infrared absorption spectrum curve and the position of minimum absorption at a wave number of 1420 $cm^{-1}$ ± 5 $cm^{-1}$ in the infrared absorption spectrum curve.
Furthermore, D1778 means the maximum value of the difference in absorbance (measured absorbance - absorbance of baseline) between the region of wave number 1778 $cm^{-1}$ ± 5 $cm^{-1}$ of the polyimide-based resin and the baseline in the infrared absorption spectrum curve. The baseline is a straight line connecting the position of minimum absorption at a wave number of 1760 $cm^{-1}$ ± 5 $cm^{-1}$ in the infrared absorption spectrum curve and the position of minimum absorption at a wave number of 1800 $cm^{-1}$ ± 5 $cm^{-1}$ in the infrared absorption spectrum curve.
The above-described standard samples are prepared as follows.

[Preparation of standard samples]

First, a polyester-based resin (PET: manufactured by Far Eastern New Century Corporation, trade name "CH-653"), a polyimide-based resin (polyetherimide (PEI)-based resin: manufactured by SABIC Innovative Plastics Corporation, trade name "Ultem 1000"), and pyromellitic anhydride (PMDA) are mixed according to the formulation shown in Table 1 to prepare a mixture. This mixture is charged into a Labo Plastomill twin-screw extruder (manufactured by Toyo Seiki Seisaku-sho, Ltd., model: 2D15W, diameter: 15 mm, L/D = 17) and melt-kneaded at 350°C to obtain a resin composition. This resin composition is extruded from a nozzle die (diameter: 3.0 mm) attached to the front end of a Labo Plastomill twin-screw extruder. The extruded resin composition is immediately cooled in a cooling water tank. Then, the resulting cooled strand of the resin composition is sufficiently dewatered, and then cut into small particles having a length of about 2 mm and a diameter of about 3 mm using a pelletizer to produce standard samples (A to I).
The compositions of the standard samples (A to I) are shown in Table 1.

[Table 1]

| Standard sample | | | A | B | C | D | E | F | G | H | I |
|---|---|---|---|---|---|---|---|---|---|---|---|
| Polyester-based resin | CH-653 | % by mass | 90 | 80 | 70 | 60 | 50 | 40 | 30 | 20 | 10 |
| Polyimide-based resin | Ultem1000 | % by mass | 10 | 20 | 30 | 40 | 50 | 60 | 70 | 80 | 90 |
| Crosslinking agent | PMDA | parts by mass | 0.225 | 0.200 | 0.175 | 0.150 | 0.125 | 0.100 | 0.075 | 0.050 | 0.025 |

[Creation of calibration curve]

The above-described calibration curve is created as follows.
Infrared spectroscopic analysis of the surfaces of the standard samples (A to I) is carried out under the following conditions to obtain an infrared absorption spectrum.

· Measuring apparatus: "Nicolet iS10" Fourier transform infrared spectrophotometer manufactured by Thermo SCIENTIFIC, Inc. and single reflection type horizontal ATR Smart-iTR manufactured by Thermo SCIENTIFIC, Inc.

· ATR crystal: diamond attached KRS-5 (angle = 42°).

· Measurement method: single reflection type ATR method.

· Measurement wave number range: 4,000 $cm^{-1}$ to 675 $cm^{-1}$.

· Wave number dependence of measurement depth: not corrected.

· Detector: deuterated triglycine sulfate (DTGS) detector and KBr beam splitter.

· Resolution: 4 $cm^{-1}$.

· Cumulative number: 16 times (the same applies to the background measurement).

· Number of times of measurement: 10 times.

Data processing is performed in the same manner as in the case of obtaining the proportion of the polyimide-based resin from the chart of the infrared absorption spectrum obtained in each measurement, the peak heights of D1410 and D1778 are determined, and the absorbance ratio (R = D1410/D1778) is calculated. With respet to the standard samples (A to I), the blending proportions of the polyester-based resin are plotted against the absorbance ratios, and the plots are logarithmically approximated to obtain a calibration curve.

In the foamed particles, the mass ratio represented by polyester-based resin:polyimide-based resin is preferably 55:45 to 95:5, more preferably 60:40 to 85:15, and still more preferably 60:40 to 75:25.

The thermoplastic resin contained in the foamed particles may include a recycled raw material. The recycled raw material may be included in either of the polyester-based resin or the polyimide-based resin, or the recycled raw material may be included in both the polyester-based resin and the polyimide-based resin. A portion or the entirety of the polyester-based resin may be a recycled raw material of the polyester-based resin, and a portion or the entirety of the polyimide-based resin may be a recycled raw material of the polyimide-based resin. Examples of the recycled raw material include the following raw materials.

1) Recovered pellets obtained by re-melting resin flakes obtained by crushing a foamed body such as foamed particles of a molded body of foamed particles with an extruder, extruding the resin flakes into a strand shape from a nozzle die, cooling this resin, and then pelletizing the cooled resin.
2) Recycled PET obtained by re-melting resin flakes obtained by crushing PET bottles with an extruder, extruding the resin flakes into a strand shape from a nozzle die, cooling this resin, and then pelletizing the cooled resin.

<<Phosphorus-based flame retardant>>

Examples of the phosphorus-based flame retardant include a phosphate-based compound, a polyphosphoric acid-based compound, red phosphorus, an organic phosphoric acid ester compound, a phosphazene compound, a phosphonic acid compound, a phosphinic acid compound, a phosphine oxide compound, a phosphorane compound, and a phosphoramide compound.

Examples of the phosphate-based compound include melamine phosphate, guanidine phosphate, ammonium phosphate, amide ammonium phosphate, and carbamate phosphate. Examples of the polyphosphoric acid-based compound include melamine polyphosphate, guanidine polyphosphate, ammonium polyphosphate, amide ammonium polyphosphate, and carbamate polyphosphate.

As the phosphorus-based flame retardant, various phosphorus-containing compounds such as a low-molecular-weight compound and a polymeric compound having repeating units can be selected. These phosphorus-based flame retardants are included in the mass excluding the total amount of the ash and the foaming agent. For this reason, in the present invention, the phosphorus-based flame retardant is treated as a portion of the thermoplastic resin.

The phosphorus-based flame retardant may be blended alone into the resin composition, or may be blended into the resin composition as a master batch (MB).

The above-mentioned phosphorus-based flame retardants may be used singly or may be used in combination of two or more kinds thereof. These phosphorus-based flame retardants may be used in combination with flame retardants other than phosphorus-based flame retardants, such as a halogen-based flame retardant, a nitrogen-based flame retardant, a silicon-based flame retardant, and an inorganic flame retardant, as long as the effects of the present invention are not impaired.

The amount of the phosphorus-based flame retardant is preferably 0.15% to 1.00% by mass, more preferably 0.25% to 0.90% by mass, and still more preferably 0.25% to 0.80% by mass, in terms of the phosphorus content (amount of phosphorus element) with respect to the total mass of the thermoplastic resin. When the phosphorus content is equal to or greater than the above-described lower limit value, flame retardance can be enhanced. When the phosphorus content is equal to or less than the above-described upper limit value, moldability can be enhanced.

<<Other resins>>

The foamed particles substantially do not contain a thermosetting resin. The phrase "substantially do not contain" means that the thermosetting resin is not contained at all, or is contained to the extent that does not affect the quality of the foamed particles. The amount of the thermosetting resin contained in the foamed particles is preferably 5.0% by mass or less, more preferably 2.0% by mass or less, still more preferably 1.0% by mass or less, and most preferably 0% by mass, with respect to 100 parts by mass of the thermoplastic resin.

The thermoplastic resin may include a thermoplastic resin (other thermoplastic resin) other than the polyester-based resin and the polyimide-based resin. Examples of the other thermoplastic resin include a polyolefin-based resin such as polyethylene or polypropylene, a polystyrene-based resin, a polyphenylene ether-based resin, a polyamide-based resin, a polycarbonate-based resin, a polyarylate-based resin, a polyphenyl sulfone-based resin, a polysulfone-based resin, and a polyether sulfone-based resin.

The total proportion of the polyester-based resin and the polyimide-based resin is preferably 90% by mass or more, more preferably 95% by mass or more, still more preferably 98% by mass or more, and particularly preferably 99% by mass or more, with respect to the total mass of the thermoplastic resin. When the total proportion of the polyester-based resin and the polyimide-based resin is equal to or greater than the above-described lower limit value, the heat-resistant strength of the foamed particles can be further increased.

<Foaming agent>

As the foaming agent, a known foaming agent can be used. Foaming agents are broadly classified into physical foaming agents and chemical foaming agents. Among these, it is preferable to use a physical foaming agent. Examples of the physical foaming agent include saturated aliphatic hydrocarbons such as propane, normal butane, isobutane, normal pentane, isopentane, and hexane; ethers such as dimethyl ether; methyl chloride; freons such as 1,1,1,2-tetrafluoroethane, 1,1-difluoroethane, and monochlorodifluoromethane; carbon dioxide, and nitrogen, and dimethyl ether, propane, normal butane, isobutane, carbon dioxide, and nitrogen are preferable. For these foaming agents, one kind may be used alone, or two or more kinds may be used in combination.

The amount of the foaming agent is not particularly limited, but is preferably, for example, 0.10 to 12 parts by mass with respect to 100 parts by mass of the thermoplastic resin.

<Optional components>

The foamed particles of the present embodiment may contain other components (optional components) in addition to the thermoplastic resin and the foaming agent.

Examples of the optional components include a cell regulator, a stabilizer, an ultraviolet absorber, a colorant, an antioxidant, a crystallization accelerator, a lubricating agent, a crosslinking agent, a surfactant, a shrinkage inhibitor, a flame retardant, and a deterioration inhibitor.

Examples of the crosslinking agent include an acid dianhydride such as pyromellitic anhydride, a polyfunctional epoxy compound, an oxazoline compound, and an oxazine compound. By blending a crosslinking agent into the resin composition, foam breaking during foaming is suppressed, and the open cell ratio is further reduced.

The amount of the crosslinking agent is, for example, preferably 0.080 to 0.80 parts by mass, more preferably 0.15 to 0.50 parts by mass, still more preferably 0.20 to 0.45 parts by mass, and particularly preferably 0.25 to 0.40 parts by mass, with respect to 100 parts by mass of the resin. When the amount of the crosslinking agent is equal to or greater than the above-described lower limit value, the Z-average molecular weight Mz of the foamed particles is further increased, and moldability is further enhanced. When the amount of the crosslinking agent is equal to or less than the above-described upper limit value, the foamed particles are satisfactorily foamed during in-mold foaming, the foamed particles are satisfactorily thermally fusion-bonded, and thus moldability is further enhanced.

The cell regulator is, for example, a mixture of inorganic powders such as talc and silica. These cell regulators increase the closed cell ratio of the foamed particles and facilitate the formation of the foamed particles.

The amount of the cell regulator is preferably, for example, 0.20 to 5.0 parts by mass with respect to 100 parts by mass of the thermoplastic resin.

Examples of the stabilizer include a calcium-zinc-based thermal stabilizer, a tin-based thermal stabilizer, and a lead-based thermal stabilizer.

The amount of the stabilizer is preferably, for example, 1.0 part by mass or less with respect to 100 parts by mass of the thermoplastic resin.

Examples of the ultraviolet absorber include a cesium oxide-based ultraviolet absorber and a titanium oxide-based ultraviolet absorber.

The amount of the ultraviolet absorber is preferably, for example, 1.0 part by mass or less with respect to 100 parts by mass of the thermoplastic resin.

Examples of the antioxidant include cerium oxide, a solid solution of cerium oxide/zirconia, cerium hydroxide, carbon, carbon nanotubes, titanium oxide, and fullerene.

The amount of the antioxidant is preferably, for example, 1.0 part by mass or less with respect to 100 parts by mass of the thermoplastic resin.

Examples of the colorant include titanium oxide, carbon black, titanium yellow, iron oxide, ultramarine blue, cobalt blue, calcined pigments, metallic pigments, mica, pearl pigments, zinc oxide, precipitated silica, and cadmium red.

When the foamed particles of the present embodiment are used for a food container, it is preferable to select products registered in the Japan Hygienic Olefin And Styrene Plastics Association among the above-mentioned colorants.
The amount of the colorant is preferably, for example, 2.0 parts by mass or less with respect to 100 parts by mass of the thermoplastic resin.
Examples of the crystallization accelerator include a silicic acid salt, carbon, and a metal oxide. Examples of the silicic acid salt include talc, which is hydrated magnesium silicate.
Examples of carbon include carbon black, carbon nanofibers, carbon nanotubes, carbon nanohorns, activated carbon, graphite, graphene, coke, mesoporous carbon, glassy carbon, hard carbon, and soft carbon, and examples of carbon black include furnace black, acetylene black, Ketjenblack, and thermal black. Examples of the metal oxide include zinc oxide and titanium oxide.
The amount of the crystallization accelerator is preferably, for example, 3.0 parts by mass or less with respect to 100 parts by mass of the thermoplastic resin.
For each of the above-mentioned optional components, one kind thereof may be used alone, or two or more kinds thereof may be used in combination. The total amount of the optional components contained in the foamed particles is preferably 0.10 to 5.0 parts by mass, and more preferably 0.50 to 3.0 parts by mass, with respect to the total mass of the foamed particles.

<Physical properties>

The foamed particles have a single glass transition temperature Tg. As the polyester-based resin and the polyimide-based resin are compatible with each other, a single glass transition temperature Tg is obtained. Since the glass transition temperature Tg of the foamed particles is single, the glass transition temperature Tg is higher than the glass transition temperature Tg of the polyester-based resin, and the heat-resistant strength of the molded body of foamed particles is increased.
The phrase "glass transition temperature is single" means that in a heat flux differential scanning calorimetry chart (DSC curve) at a heating rate of 10°C/min, the glass transition temperature Tg on a lower temperature side with respect to a crystallization peak observed in a second temperature rising process can be recognized as being single. However, in a case where a crystallization peak is not observed in the second temperature rising process, it is meant that the glass transition temperature Tg in the temperature range of the second temperature rising process (30°C to 300°C) can be recognized as being single. The glass transition temperature Tg of the foamed particles is, for example, preferably 80°C to 130°C, more preferably 80°C to 125°C, still more preferably 80°C to 120°C, and particularly preferably 80°C to 100°C. When the Tg is equal to or higher than the above-described lower limit value, the heat-resistant strength and the dimensional stability under heat of the molded body of foamed particles are further enhanced. When the Tg is equal to or lower than the above-described upper limit value, productivity is increased by shortening the molding cycle, and moldability is enhanced.
The glass transition temperature Tg of the foamed particles is determined by heat flux differential scanning calorimetry at a heating rate of 10°C/min.
The glass transition temperature Tg of the foamed particles can be regarded as the same as the glass transition temperature Tg of the thermoplastic resin constituting the foamed particles.
The absolute value of the difference between the amount of heat absorption and the amount of heat generation (difference between heat absorption and heat generation) in the foamed particles is preferably 3 to 35 J/g, more preferably 5 to 25 J/g, and still more preferably 7 to 15 J/g. When the difference between heat absorption and heat generation is equal to or greater than the above-described lower limit value, the crystallinity is increased, and the heat-resistant strength and the dimensional stability under heat of the molded body of foamed particles are further enhanced. When the difference between heat absorption and heat generation is equal to or less than the above-described upper limit value, the crystallinity is not excessively increased, excellent secondary foamability and thermal fusion-bonding properties are exhibited, and moldability and mechanical strength can be increased.
The difference between heat absorption and heat generation is the difference between the amount of heat absorption and the amount of heat generation, which is determined by heat flux differential scanning calorimetry at a heating rate of 10°C/min.
The difference between heat absorption and heat generation of the foamed particles can be regarded as the same as the difference between heat absorption and heat generation of the thermoplastic resin constituting the foamed particles.
The size of the foamed particles is appropriately selected according to the use application, and the average particle diameter of a group of foamed particles is, for example, 0.50 to 5.0 mm.
The average particle diameter of a group of foamed particles is a value expressed as D50.
Specifically, using a RO-TAP sieve shaker (manufactured by Iida Manufacture Co., Ltd.), about 25 g of a sample is sieved for 10 minutes with JIS standard sieves (JIS Z8801-1:2006) having sieve openings of 26.5 mm, 22.4 mm, 19.0 mm,

16.0 mm, 13.2 mm, 11.20 mm, 9.50 mm, 8.80 mm, 6.70 mm, 5.66 mm, 4.76 mm, 4.00 mm, 3.35 mm, 2.80 mm, 2.36 mm, 2.00 mm, 1.70 mm, 1.40 mm, 1.18 mm, 1.00 mm, 0.85 mm, 0.71 mm, 0.60 mm, 0.50 mm, 0.425 mm, 0.355 mm, 0.300 mm, 0.250 mm, 0.212 mm, and 0.180 mm, and the weight of the sample on the sieve was measured. A cumulative weight distribution curve is created from the obtained results, and the particle diameter at which the cumulative weight is 50% (median diameter) is defined as the average particle diameter.

The open cell ratio of the foamed particles is preferably 20% or less, more preferably 18% or less, and still more preferably 16% or less. When the open cell ratio of the foamed particles is equal to or less than the above-described upper limit value, the secondary foamability of the foamed particles are further enhanced, and the moldability and mechanical strength are further increased. The open cell ratio of the foamed particles is determined by the method described in JIS K7138:2006 "Rigid Cellular Plastics - Determination of the Volume Percentage of Open Cells and of Closed Cells".

The bulk density of the foamed particles is, for example, preferably 0.027 to 0.675 g/cm$^3$, more preferably 0.045 to 0.45 g/cm$^3$, and still more preferably 0.0675 to 0.27 g/cm$^3$. When the bulk density is equal to or greater than the above-described lower limit value, the shock absorbability of the molded body of foamed particles is increased. When the bulk density is equal to or less than the above-described upper limit value, the mechanical strength of the molded body of foamed particles is increased.

The bulk foaming ratio of the foamed particles is, for example, preferably 2 to 50 times, more preferably 3 to 30 times, and still more preferably 5 to 20 times. When the bulk foaming ratio is equal to or greater than the above-described lower limit value, the amount of the resin per volume can be further reduced, and the shock absorbability is increased. When the bulk foaming ratio is equal to or less than the above-described upper limit value, mechanical strength is increased.

The average cell diameter of the foamed particles is, for example, preferably 5 to 500 μm, more preferably 10 to 400 μm, and still more preferably 20 to 300 μm. When the average cell diameter is equal to or greater than the above-described lower limit value, the shock absorbing absorbability is increased. When the average cell diameter is equal to or less than the above-described upper limit value, mechanical strength is increased. The average cell diameter can be measured in accordance with the test method of ASTM D3576-77.

In the foamed particles, the temperature at which the loss tangent tanδ is maximized in the solid viscoelasticity measurement at a heating rate of 5°C/min and a frequency of 1 Hz is preferably 120°C to 230°C, more preferably 130°C to 225°C, and still more preferably 150°C to 220°C. When the temperature at which the loss tangent tan δ is maximized is equal to or higher than the above-described lower limit value, the temperature at which the molded body of foamed particles is softened is increased, and the heat-resistant strength of the molded body of foamed particles is further increased. When the temperature at which the loss cotangent tanδ is maximized is equal to or less than the above-described upper limit value, the temperature at which the molded body of foamed particles is softened is not excessively high, and moldability is further enhanced. The temperature at which the loss tangent tanδ of the foamed particles is maximized is determined by forming a molded body of foamed particles and measuring the solid viscoelasticity of this molded body of foamed particles.

The Z-average molecular weight Mz of the foamed particles is $2.5 \times 10^5$ to $5.0 \times 10^5$, preferably $2.9 \times 10^5$ to $5.0 \times 10^5$, and more preferably $3.2 \times 10^5$ to $5.0 \times 10^5$. When the Z-average molecular weight Mz of the foamed particles is equal to or greater than the above-described lower limit value, the open cell ratio of the foamed particles is suppressed, and moldability is enhanced. When the Z-average molecular weight Mz of the foamed particles is equal to or less than the above-described upper limit value, the foamed particles are satisfactorily foamed during in-mold foam molding, the foamed particles are satisfactorily thermally fusion-bonded with each other, and thus moldability is enhanced.

The number average molecular weight Mn of the foamed particles is preferably $0.10 \times 10^5$ to $0.30 \times 10^5$, more preferably $0.15 \times 10^5$ to $0.25 \times 10^5$, and still more preferably $0.18 \times 10^5$ to $0.23 \times 10^5$.

When the number average molecular weight Mn of the foamed particles is equal to or greater than the above-described lower limit value, impact resistance is enhanced. When the number average molecular weight Mn of the foamed particles is equal to or less than the above-described upper limit value, moldability is further enhanced.

The mass average molecular weight Mw of the foamed particles is preferably $0.50 \times 10^5$ to $2.0 \times 10^5$, more preferably $0.70 \times 10^5$ to $1.5 \times 10^5$, and still more preferably $0.80 \times 10^5$ to $1.2 \times 10^5$.

When the mass average molecular weight Mw of the foamed particles is equal to or greater than the above-described lower limit value, impact resistance is enhanced. When the mass average molecular weight Mw of the foamed particles is equal to or less than the above-described upper limit value, moldability is further enhanced.

The molecular weight distribution of the foamed particles represented by Mw/Mn is, for example, preferably 3.0 to 7.0, more preferably 3.5 to 6.5, and still more preferably 4.0 to 6.0. When the molecular weight distribution of the foamed particles is equal to or greater than the above-described lower limit value, impact resistance is further enhanced. When the molecular weight distribution of the foamed particles is equal to or less than the above-described upper limit value, moldability is further enhanced.

The number average molecular weight Mn, the mass average molecular weight Mw, and the Z-average molecular weight Mz of the foamed particles are regulated by a combination of the type and the amount of the raw

material polyester-based resin and the raw material polyimide-based resin, the type and the amount of the crosslinking agent, and the like, which are described in a later section.

The number average molecular weight Mn, the mass average molecular weight Mw, and the Z-average molecular weight Mz of the foamed particles can be regarded as the same as the number average molecular weight Mn, the mass average molecular weight Mw, and the Z-average molecular weight Mz of the thermoplastic resin contained in the foamed particles.

[Measurement method for number average molecular weight Mn, mass average molecular weight Mw, and Z-average molecular weight Mz]

The number average molecular weight Mn, the mass average molecular weight Mw, and the Z-average molecular weight Mz can be measured by the following method.

5 mg of a sample is taken from a measurement target, 0.5 mL of hexafluoroisopropanol (HFIP) and 0.5 mL of chloroform are added in this order to the sample, and the resulting mixture is lightly shaken manually. The resulting is left to stand for an immersion time of 6 ± 1.0 hr. After confirming that the sample has completely dissolved, the sample is diluted with chloroform to 10 mL, and the dilution is lightly shaken manually to be mixed. Thereafter, the mixture is filtered through a nonaqueous 0.45-μm CHROMATODISC manufactured by GL Sciences, Inc., or a nonaqueous 0.45-μm syringe filter manufactured by Shimadzu GLC, Ltd. to prepare a measurement sample. The measurement sample is measured with a chromatograph under the following measurement conditions, and the number average molecular weight Mn, the mass average molecular weight Mw, and the Z-average molecular weight Mz of the sample are determined from a standard polystyrene calibration curve created in advance.

(Measuring apparatus)

· Measuring apparatus = manufactured by TOSOH CORPORATION, "HLC-8320GPC EcoSEC", gel permeation chromatograph (with built-in RI detector and UV detector).

[GPC measurement conditions]

· Column

<Sample side>

Guard column = TSK guardcolumn HXL-H (6.0 mm × 4.0 cm) manufactured by TOSOH CORPORATION × 1 piece.

Measurement column = TSKgel GMHXL (7.8 mm I.D. × 30 cm) manufactured by TOSOH CORPORATION × 2 pieces in series.

<Reference side>

Resistance tube (inner diameter 0.1 mm × 2 m) × 2 pieces in series.
Column temperature = 40°C.
Mobile phase = chloroform.

<Flow rate of mobile phase>

Sample side pump = 1.0 mL/min.
Reference side pump = 0.5 mL/min.
Detector = UV detector (254 nm).
Injection volume = 15 μL.
Measurement time = 25 minutes.

Sampling pitch = 500 msec.

[Standard polystyrene samples for calibration curve]

Standard polystyrene samples for a calibration curve each having a mass average molecular weight Mw of 5,620,000, 3,120,000, 1,250,000, 442,000, 151,000, 53,500, 17,000, 7,660, 2,900, or 1,320 from product names "STANDARD SM-105" and "STANDARD SH-75" manufactured by Showa Denko K.K. were used.

The above-described standard polystyrenes for a calibration curve were grouped into A (5,620,000, 1,250,000, 151,000, 17,000, and 2,900) and B (3,120,000, 442,000, 53, 500, 7, 660, and 1,320). A is weighed (2 mg, 3 mg, 4 mg, 4 mg, 4 mg) and then dissolved in 30 mL of chloroform. B is weighed (3 mg, 4 mg, 4 mg, 4 mg, 4 mg) and then dissolved in 30 mL of chloroform. A standard polystyrene calibration curve is obtained by injecting 50 μL of each of the prepared solutions A and B, and creating a calibration curve (cubic equation) from the retention times obtained after measurement. The number average molecular weight Mn, the mass average molecular weight Mw, and the Z-average molecular weight Mz are calculated using the calibration curve.

The crystallinity of the foamed particles is preferably 3.0% to 10%, more preferably 3.0% to 9.0%, and still more preferably 3.0% to 7.0%. When the crystallinity of the foamed particles is equal to or greater than the above-described lower limit value, heat resistance is further enhanced. When the crystallinity of the foamed particles is equal to or less than the above-described upper limit value, secondary foaming occurs satisfactorily during in-mold foam molding, the foamed particles are more strongly thermally fusion-bonded to each other, and the mechanical strength of the molded body of foamed particles is further increased. The crystallinity can be regulated by a combination of the type of the crosslinking agent, the amount of the crosslinking agent added, the temperature during the production of the foamed particles, and the like.

<Production method>

Examples of a method for producing the foamed particles of the present invention include a method that includes extruding a resin composition containing a thermoplastic resin and a foaming agent and foaming the resin composition to obtain foamed particles, and a method that includes extruding a thermoplastic resin to obtain resin particles, impregnating the obtained resin particles with a foaming agent to obtain foamable particles, and heating the foamable particles to obtain foamed particles.

As a more specific method for producing the foamed particles, for example, the following methods and the like may be mentioned.

1) A method that includes supplying a thermoplastic resin and a foaming agent to an extruder, melt-kneading the thermoplastic resin and the foaming agent, extruding the resin composition in a molten state through a hole of a die provided at the extruder tip into the air to foam the resin composition, cutting the foamed resin composition simultaneously while extruding and foaming the resin composition, and casting the cut and foamed spherical particles into water to be cooled, thereby obtaining foamed particles.
2) A method that includes supplying a thermoplastic resin and a foaming agent to an extruder, melt-kneading the thermoplastic resin and the foaming agent, extruding the resin composition in a molten state through a hole of a die provided at the extruder tip into water to foam and cool the resin composition, and cutting the resin composition simultaneously while extruding, foaming, and cooling the resin composition, thereby obtaining cut and foamed spherical foamed particles.
3) A method that includes supplying a thermoplastic resin and a foaming agent to an extruder, melt-kneading the thermoplastic resin and the foaming agent, extruding the resin composition in a molten state through a hole of a die provided at the extruder tip into water to cool the resin composition, cutting the resin composition simultaneously while extruding and cooling the resin composition, thereby obtaining cut spherical foamable particles, and heating the foamable particles to obtain foamed particles.
4) A method that includes supplying a thermoplastic resin to an extruder, melt-kneading the thermoplastic resin, extruding the thermoplastic resin in a molten state through a hole of a die provided at the extruder tip into the air, cutting the thermoplastic resin simultaneously while extruding the resin, casting cut spherical resin particles into water to be cooled to obtain resin particles, impregnating the resin particles with a foaming agent to obtain foamable particles, and heating the foamable particles to obtain foamed particles.
5) A method that includes supplying a thermoplastic resin to an extruder, melt-kneading the thermoplastic resin, extruding the thermoplastic resin in a molten state through a hole of a die provided at the extruder tip into water to cool the resin, cutting the thermoplastic resin simultaneously while extruding and cooling the resin to obtain cut spherical resin particles, impregnating the resin particles with a foaming agent to obtain foamable particles, and heating the foamable particles to obtain foamed particles.

6) A method that includes supplying a thermoplastic resin to an extruder, melt-kneading the thermoplastic resin, extruding the thermoplastic resin in a molten state into a strand shape through a hole of a die provided at the extruder tip, guiding the extruded thermoplastic resin into water to cool the resin, cutting the cooled thermoplastic resin at a predetermined length to obtain columnar resin particles, impregnating the resin particles with a foaming agent to obtain foamable particles, and heating the foamable particles to obtain foamed particles.

Hereinbelow, more detailed explanation is given on a method that includes extruding a resin composition into the air to foam the resin composition, cutting this foamed resin composition, and casting spherical particles into water to cool the particles.

An extruder used for producing the foamed particles of the present invention is described below.

A foamed particle production apparatus 10 in FIG. 4 has an extruder (not shown) and a nozzle die 1 provided at the extruder tip. A rotation shaft 2 is connected to the tip of the nozzle die 1. The rotation shaft 2 penetrates a front part 41a of a cooling drum 41 constituting a cooling member 4, which is described in a later section, and is connected to a driving member 3 such as a motor.

A plurality of nozzle outlet parts 11 are formed at equal intervals on the same imaginary circle A centered on the rotation shaft 2 on the front end surface 1a of the nozzle die 1 (see FIG. 5).

The number of nozzles of the nozzle die 1 (that is, the number of outlet parts 11) is preferably 2 to 80. When the number of nozzles is one, the production efficiency of the foamed particles may decrease. When the number of nozzles is more than 80, the extruded foamed bodies having been extrusion-foamed through mutually adjacent nozzles may come into contact with each other and coalesce. Furthermore, the foamed particles obtained by cutting the extruded foamed body may coalesce with each other. The number of nozzles is more preferably 5 to 60, and particularly preferably 8 to 50.

The diameter (opening diameter) of the outlet part 11 of a nozzle in the nozzle die 1 is preferably 0.20 to 2.0 mm. When the opening diameter of the outlet part 11 is less than 0.20 mm, the extrusion pressure may be too high, and thus it may be difficult to perform extrusion foaming. When the opening diameter of the outlet part 11 is larger than 2.0 mm, the diameter of the foamed particles may increase, and the filling efficiency into the mold may decrease. The opening diameter of the outlet part 11 is more preferably 0.30 to 1.6 mm, and particularly preferably 0.40 to 1.2 mm.

The length of the landing part of the nozzle die 1 is preferably 4 to 30 times the opening diameter of the outlet part 11 of the nozzle of the nozzle die 1. When the length is less than 4 times, a fracture may occur, and thus extrusion foaming may not be performed stably. When the length is greater than 30 times, the nozzle die 1 may receive too high a pressure to to preforom extrusion foaming.

The length of the landing part is more preferably 5 to 20 times.

The rotation shaft 2 is disposed in a state of protruding forward in a portion surrounded by the outlet part 11 of the nozzle on the front end surface 1a of the nozzle die 1.

One or a plurality of rotary blades 5 are integrally provided on the outer peripheral surface of the rear end part of the rotation shaft 2, and all the rotary blades 5 are in a state of being in contact with the front end surface 1a at all times during rotation. When a plurality of rotary blades 5 are integrally provided on the rotation shaft 2, the plurality of rotary blades 5 are arranged at equal intervals in the circumferential direction of the rotation shaft 2. In addition, FIG. 5 shows, as an example, a case where four rotary blades 5 are integrally provided on the outer peripheral surface of the rotation shaft 2.

The rotary blades 5 are configured to move on an imaginary circle A on which the outlet part 11 of the nozzle is formed, while being constantly in contact with the front end surface 1a when the rotation shaft 2 rotates, and to be capable of sequentially and continuously cutting the extruded foamed body extruded from the outlet part 11 of the nozzle.

In the foamed particle production apparatus 10, a cooling member 4 that surrounds at least the front end surface 1a of the nozzle die 1 and the rotation shaft 2, is disposed. The cooling member 4 includes a cooling drum 41 having a bottomed cylindrical shape, which includes a front part 41a having a front circular shape with a diameter larger than that of the nozzle die 1, and a cylindrical-shaped peripheral wall part 41b extending backward from the outer peripheral edge of the front part 41a.

A supply port 41c for supplying a cooling liquid 42 is formed in a region in the peripheral wall part 41b, the region facing the outer surface of the nozzle die 1. The supply port 41c penetrates the peripheral wall part 41b. A supply pipe 41d for supplying the cooling liquid 42 into the cooling drum 41 is connected to the supply port 41c at the outer surface of the peripheral wall part 41b.

The cooling liquid 42 is configured to be supplied through the supply pipe 41d obliquely forward along an inner peripheral surface of the peripheral wall part 41b of the cooling drum 41.

A discharge port 41e is formed on the lower surface of the front end part of the peripheral wall part 41b. The discharge port 41e penetrates the peripheral wall part 41b. A discharge pipe 41f is connected to the discharge port 41e at the outer surface of the peripheral wall part 41b.

The extruder is not particularly limited as long as it is an extruder that has been generally used in the related art, and examples thereof include a single-screw extruder, a twin-screw extruder, and a tandem type extruder in which a plurality of extruders are connected.

A method for producing foamed particles using the foamed particle production apparatus 10 is described below.

The cooling liquid 42 is supplied from the supply pipe 41d into the cooling drum 41 through the supply port 41c. The supplied cooling liquid 42 advances forward (in the direction of the front part 41a) apirally along the inner peripheral surface of the peripheral wall part 41b due to a centrifugal force generated by the flow speed when the cooling liquid 42 is supplied. The cooling liquid 42 gradually spreads in a direction orthogonal to the traveling direction (that is, the circumferential direction of the peripheral wall part 41b) while traveling along the inner peripheral surface of the peripheral wall part 41b. The cooling liquid 42 that has spread in the circumferential direction of the peripheral wall part 41b completely covers the entire inner peripheral surface of the peripheral wall part 41b in front of the supply port 41c.

The cooling liquid 42 is not particularly limited as long as it can cool the foamed particles, and examples thereof include water and alcohol; however, when the treatment after use is considered, water is preferred.

The temperature of the cooling liquid 42 is preferably 10°C to 40°C. When the temperature of the cooling liquid is 10°C or higher, the nozzle die 1 located in the vicinity of the cooling drum 41 is not excessively cooled, and the resin composition can be extruded more smoothly from the outlet part 11. When the temperature of the cooling liquid is 40°C or lower, cooling of particulate cut objects can be carried out more rapidly.

The glass transition temperature Tg of the polyester-based resin (raw material polyester-based resin) blended into the resin composition is preferably 50°C to 100°C, more preferably 60°C to 90°C, and still more preferably 70°C to 85°C. When the Tg is equal to or higher than the above-described lower limit value, the heat-resistant strength and the dimensional stability under heat can be further enhanced. When the Tg is equal to or lower than the above-described upper limit value, productivity is increased by shortening the molding cycle, and moldability is enhanced. The "moldability", for example, means a performance related to how close the molded body can be brought to a desired shape when the foamed particles are filled in a cavity of a mold and heated to be secondarily foamed, , and the closer to the desired shape, the "better" the moldability.

The melting point of the raw material polyester-based resin is preferably 230°C to 270°C, more preferably 240°C to 260°C, and still more preferably 245°C to 255°C. When the melting point is equal to or higher than the above-described lower limit value, the heat-resistant strength and the dimensional stability under heat are further enhanced. When the melting point is equal to or lower than the above-described upper limit value, productivity is increased by shortening the molding cycle, and moldability is enhanced.

The intrinsic viscosity (IV value) of the raw material polyester-based resin is preferably 0.50 to 1.5, more preferably 0.60 to 1.3, and still more preferably 0.70 to 1.2. When the IV value is equal to or greater than the above-described lower limit value, foam breaking during foaming is suppressed, and the open cell ratio is further reduced. When the IV value is equal to or less than the above-described upper limit value, density is further decreased, the surface of the molded body of foamed particles is made smoother, and the excellence in appearance is enhanced.

The IV value can be measured by the method of JIS K 7367-5 (2000).

The number average molecular weight Mn of the raw material polyester-based resin is preferably $0.050 \times 10^5$ to $0.40 \times 10^5$, more preferably $0.10 \times 10^5$ to $0.35 \times 10^5$, and still more preferably $0.15 \times 10^5$ to $0.30 \times 10^5$.

When the number average molecular weight Mn of the raw material polyester-based resin is equal to or greater than the above-described lower limit value, impact resistance is enhanced. When the number average molecular weight Mn of the raw material polyester-based resin is equal to or less than the above-described upper limit value, heat resistance is further enhanced.

The mass average molecular weight Mw of the raw material polyester-based resin is preferably $0.30 \times 10^5$ to $1.3 \times 10^5$, more preferably $0.40 \times 10^5$ to $1.2 \times 10^5$, and still more preferably $0.50 \times 10^5$ to $1.2 \times 10^5$.

When the mass average molecular weight Mw of the raw material polyester-based resin is within the above-described range, impact resistance is further enhanced.

The Z-average molecular weight Mz of the raw material polyester-based resin is preferably $0.20 \times 10^5$ to $2.5 \times 10^5$, more preferably $0.30 \times 10^5$ to $2.0 \times 10^5$, and still more preferably $0.90 \times 10^5$ to $1.8 \times 10^5$.

When the Z average molecular weight Mz of the raw material polyester-based resin is equal to or greater than the above-described lower limit value, heat resistance is enhanced. When the Z-average molecular weight Mz of the raw material polyester-based resin is equal to or less than the above-described upper limit value, moldability is enhanced.

The molecular weight distribution of the raw material polyester-based resin represented by Mw/Mn is preferably 1.5 to 5.0, more preferably 2.0 to 4.0, and still more preferably 2.5 to 3.5.

When the Mw/Mn of the raw material polyester-based resin is within the above-described range, moldability is further enhanced.

The number average molecular weight Mn, the mass average molecular weight Mw, and the Z-average molecular weight Mz of the raw material polyester-based resin can be measured by methods similar to those for the number average molecular weight Mn, the mass average molecular weight Mw, and the Z-average molecular weight Mz of the foamed particles.

The glass transition temperature Tg of the polyimide-based resin (raw material polyimide-based resin) blended into the resin composition is preferably 190°C to 240°C, more preferably 200°C to 230°C, and still more preferably 210°C to

220°C. When the glass transition temperature Tg of the raw material polyimide-based resin is equal to or higher than the above-described lower limit value, the heat-resistant strength and the heat resistance are further increased. When the glass transition temperature Tg of the raw material polyimide-based resin is equal to or lower than the above-described upper limit value, productivity is increased by shortening the molding cycle, and moldability is enhanced.

The melt flow rate (MFR) of the raw material polyimide-based resin is preferably 3.0 to 30 g/10 min, more preferably 5.0 to 25 g/10 min, and still more preferably 7.0 to 20 g/10 min. When the MFR of the raw material polyimide-based resin is equal to or greater than the above-described lower limit value, productivity is increased by shortening the molding cycle, and moldability is enhanced. When the MFR is equal to or less than the above-described upper limit value, the heat-resistant strength and the heat resistance are further increased.

The number average molecular weight Mn of the raw material polyimide-based resin is preferably $0.10 \times 10^5$ to $0.50 \times 10^5$, more preferably $0.15 \times 10^5$ to $0.30 \times 10^5$, and still more preferably $0.20 \times 10^5$ to $0.25 \times 10^5$. When the number average molecular weight Mn of the raw material polyimide-based resin is equal to or greater than the above-described lower limit value, impact resistance is further enhanced. When the average molecular weight Mn of the raw material polyimide-based resin is equal to or less than the above-described upper limit value, moldability is further enhanced.

The mass average molecular weight Mw of the raw material polyimide-based resin is preferably $0.20 \times 10^5$ to $0.80 \times 10^5$, more preferably $0.30 \times 10^5$ to $0.70 \times 10^5$, and still more preferably $0.40 \times 10^5$ to $0.60 \times 10^5$. When the mass average molecular weight Mw of the raw material polyimide-based resin is equal to or greater than the above-described lower limit value, impact resistance is further enhanced. When the mass average molecular weight Mw of the raw material polyimide-based resin is equal to or less than the above-described upper limit value, moldability is further enhanced.

The Z-average molecular weight Mz of the raw material polyimide-based resin is preferably $0.40 \times 10^5$ to $1.2 \times 10^5$, more preferably $0.50 \times 10^5$ to $1.0 \times 10^5$, and still more preferably $0.60 \times 10^5$ to $0.90 \times 10^5$.

When the Z-average molecular weight Mz of the raw material polyimide-based resin is equal to or greater than the above-described lower limit value, heat resistance is enhanced. When the Z-average molecular weight Mz of the raw material polyimide-based resin is equal to or less than the above-described upper limit value, moldability is enhanced.

The molecular weight distribution of the raw material polyimide-based resin represented by Mw/Mn is preferably 1.0 to 3.0, more preferably 1.5 to 2.5, and still more preferably 2.0 to 2.5.

When the Mw/Mn of the raw material polyimide-based resin is within the above-described range, moldability is further enhanced. The number average molecular weight Mn, the mass average molecular weight Mw, and the Z-average molecular weight Mz of the raw material polyimide-based resin can be measured by methods similar to those for the number average molecular weight Mn, the mass average molecular weight Mw, and the Z-average molecular weight Mz of the foamed particles.

These resin compositions are extruded from the outlet part 11 of the nozzle while rotating the rotary blades 5. The resin composition is extrusion-foamed from the nozzle die 1 to form an extruded foamed body, which is cut by the rotary blades 5 to form particulate cut objects. All the rotary blades 5 rotate while being constantly in contact with the front end surface 1a, and the extruded foamed body having been extrusion-foamed from the nozzle die 1 is cut into particulate cut objects in the atmosphere at a regular time interval by a shear stress generated between the rotary blades 5 and the end edge of the outlet part 11 of the nozzle. In this process, water may be sprayed in an atomized form to the extruded foamed body to the extent that the extruded foamed body is not excessively cooled.

The extrusion is performed such that the resin composition does not foam within the nozzle of the nozzle die 1. The resin composition does not foam immediately after being discharged from the outlet part 11 of the nozzle, and starts foaming after a short time has passed since being discharged. Therefore, the extruded foamed body is composed of an unfoamed part immediately after being discharged from the outlet part 11 of the nozzle, and a foamed part that is in the process of foaming, which is continuous with the unfoamed part and is extruded prior to the unfoamed part.

The unfoamed part maintains its unfoamed state until foaming starts after the resin composition is discharged from the outlet part 11 of the nozzle. The time during which this unfoamed part is maintained can be adjusted by the resin pressure at the outlet part 11 of the nozzle, the amount of the foaming agent, and the like. When the resin pressure at the outlet part 11 of the nozzle is high, the resin composition does not foam immediately after being extruded from the nozzle die 1, and maintains an unfoamed state. The jetting pressure of the thermoplastic resin at the outlet part 11 of the nozzle can be adjusted by the opening diameter of the outlet part 11 of the nozzle, the extrusion amount, and the melt viscosity and the melt tension of the resin composition. In addition, by adjusting the amount of the foaming agent to an appropriate amount, foaming of the thermoplastic resin composition in the inside of the nozzle die 1 can be prevented, and an unfoamed part can be reliably formed.

Since all the rotary blades 5 cut the extruded foamed body in a state of being constantly in contact with the front end surface 1a, the extruded foamed body becomes particulate cut objects that have been cut in the unfoamed part immediately after being discharged from the outlet part 11 of the nozzle.

The rotation rate of the rotary blades 5 is preferably 2,000 to 10,000 rpm, more preferably 2,000 to 9,000 rpm, and particularly preferably 2,000 to 8,000 rpm. When the rotation rate is equal to or greater than the above-described lower limit value, the extruded foamed body can be more reliably cut by the rotary blades 5, coalescence can be prevented, and the

foamed particles can be formed into a more uniform shape. When the rotation rate is equal to or less than the above-described upper limit value, the time until the cooling liquid 42 that is described in a later section is reached is sufficiently secured, and the bulk foaming ratio is further increased.

As shown in FIG. 6, the particulate cut objects P that have been cut by the rotary blades 5 are scattered toward the inner wall of the cooling drum 41 simultaneously with the cutting, due to the cutting stress of the rotary blades 5, and collide with the cooling liquid 42 that covers the inner peripheral surface of the peripheral wall part 41b. The particulate cut objects continue to foam until the particulate cut objects collide with the cooling liquid 42, and the particulate cut objects grow into a substantially spherical shape by the foaming. Therefore, the obtained foamed particles have a substantially spherical shape. In this case, it is preferable that the particulate cut objects P collide with the cooling liquid 42 obliquely relative to the surface of the cooling liquid 42 and from the upstream to the downstream in the flow direction X of the cooling liquid 42 (see FIG. 6). When the particulate cut objects are made to collide with the cooling liquid 42, as the particulate cut objects P collide with the cooling liquid 42 from a direction in which the flow of the cooling liquid 42 is followed, the particulate cut objects P are not repelled from the surface of the cooling liquid 42, and the particulate cut objects P smoothly and reliably enter the cooling liquid 42 and are cooled by the cooling liquid 42 to become foamed particles.

According to the present embodiment, since the extruded foamed body is cut by the rotary blade 5, and then the particulate cut objects are immediately cooled by the cooling liquid 42, the particulate cut objects are prevented from excessively foaming, and foamed particles having a desired bulk foaming ratio are obtained.

In addition, since the particulate cut objects are immediately cooled after the cutting of the extruded foamed body, an increase in the crystallinity of the foamed particles is suppressed. Therefore, the foamed particles exhibit excellent secondary foamability and thermal fusion-bonding ability, and the resulting molded body of foamed particles has excellent mechanical strength. In addition, by increasing the crystallinity of the molded body of foamed particles during in-mold foam molding, the dimensional stability under heat is further enhanced.

The foamed particles cooled by the cooling liquid 42 flow into the discharge pipe 41f through the discharge port 41e together with the cooling liquid 42 and are discharged to the outside of the cooling drum 41. The discharged foamed particles are separated from the cooling liquid 42 and are dried as necessary. Examples of a method for separating the foamed particles and the cooling liquid 42 include conventionally known solid-liquid separation methods such as passing through a sieve.

(Molded body of foamed thermoplastic resin particles)

The molded body of foamed thermoplastic resin particles (molded body of foamed particles) of the present embodiment is obtained by foaming foamed particles and fusing the foamed particles with each other. Examples of the molded body of foamed particles include parts for transportation equipment such as automobiles, railway vehicles, aircraft, and marine vessels; cushioning materials and housings for electric appliances; transport containers, packaging materials, structural members, and thermal insulating materials. Examples of automobile parts include a battery case, a battery tray, a member used near an engine, an exterior material, and a thermal insulating material. Examples of railway vehicle members include a sheet core material, an exterior material, and a thermal insulating material.

The size of the molded body of foamed particles is not particularly limited and is appropriately selected in consideration of the use application.

The proportion of the polyester-based resin with respect to the thermoplastic resin in the molded body of foamed particles is the same as the proportion of the polyester-based resin with respect to the thermoplastic resin in the foamed particles.

The proportion of the polyimide-based resin with respect to the thermoplastic resin in the molded body of foamed particles is the same as the proportion of the polyimide-based resin with respect to the thermoplastic resin in the foamed particles.

The proportion of the polyimide-based resin in the molded body of foamed particles can be measured by slicing the molded body of foamed particles from the surface of the molded body of foamed particles to any thickness (for example, 0.2 mm) along a direction orthogonal to the thickness direction (plane direction), and using this as a measurement sample in the same manner as the proportion of the polyimide-based resin in the foamed particles.

The molded body of foamed particles exhibits a single glass transition temperature Tg. As the polyester-based resin and the polyimide-based resin are compatible with each other, a single glass transition temperature Tg is obtained. Since the glass transition temperature Tg of the molded body of foamed particles is single, the glass transition temperature Tg becomes higher than the glass transition temperature Tg of the polyester-based resin, and the heat-resistant strength of the molded body of foamed particles is increased.

The glass transition temperature Tg of the molded body of foamed particles is, for example, preferably 80°C to 130°C, more preferably 80°C to 125°C, still more preferably 80°C to 120°C, and particularly preferably 80°C to 100°C. When the Tg is equal to or higher than the above-described lower limit value, the heat-resistant strength and the dimensional stability under heat of the molded body of foamed particles are further increased. When the Tg is equal to or

lower than the above-described upper limit value, moldability is enhanced, and the appearance is beautifully finished.

The difference between heat absorption and heat generation of the molded body of foamed particles is preferably 3.0 to 35 J/g, more preferably 10 to 30 J/g, and still more preferably 15 to 28 J/g. When the difference between heat absorption and heat generation is equal to or greater than the above-described lower limit value, the crystallinity is increased, and the dimensional stability under heat of the molded body of foamed particles is enhanced. When the difference between heat absorption and heat generation is equal to or less than the above-described upper limit value, the crystallinity is not excessively increased, and the impact resistance of the molded body of foamed particles is enhanced. The difference between heat absorption and heat generation is the difference between the amount of heat absorption and the amount of heat generation, which is determined by heat flux differential scanning calorimetry at a heating rate of 10°C/min.

The Z-average molecular weight Mz of the molded body of foamed particles is $2.5 \times 10^5$ to $5.0 \times 10^5$, preferably $2.9 \times 10^5$ to $5.0 \times 10^5$, and more preferably $3.2 \times 10^5$ to $5.0 \times 10^5$.

When the Z average molecular weight Mz of the molded body of foamed particles is equal to or greater than the above-described lower limit value, moldability is enhanced by further reducing the open cell ratio. When the Z average molecular weight Mz of the molded body of foamed particles is equal to or less than the above-described upper limit value, the foaming ratio is further increased, the foamed particles are thermally fusion-bonded with each other in a satisfactory manner, and thereby moldability is enhanced.

The number average molecular weight Mn of the molded body of foamed particles is preferably $0.10 \times 10^5$ to $0.30 \times 10^5$, more preferably $0.15 \times 10^5$ to $0.25 \times 10^5$, and still more preferably $0.18 \times 10^5$ to $0.23 \times 10^5$

When the number average molecular weight Mn of the molded body of foamed particles is equal to or greater than the above-described lower limit value, impact resistance is enhanced. When the number average molecular weight Mn of the molded body of foamed particles is equal to or less than the above-described upper limit value, moldability is further enhanced.

The mass average molecular weight Mw of the molded body of foamed particles is preferably $0.50 \times 10^5$ to $2.0 \times 10^5$, more preferably $0.70 \times 10^5$ to $1.5 \times 10^5$, and still more preferably $0.80 \times 10^5$ to $1.2 \times 10^5$

When the mass average molecular weight Mw of the molded body of foamed particles is equal to or greater than the above-described lower limit value, impact resistance is enhanced. When the mass average molecular weight Mw of the molded body of foamed particles is equal to or less than the above-described upper limit value, moldability is further enhanced.

The number average molecular weight Mn, the mass average molecular weight Mw, and the Z-average molecular weight Mz of the molded body of foamed particles can be measured by methods similar to those for the number average molecular weight Mn, the mass average molecular weight Mw, and the Z-average molecular weight Mz of the foamed particles.

The number average molecular weight Mn, the mass average molecular weight Mw, and the Z-average molecular weight Mz of the molded body of foamed particles are regulated by a combination of the type and the amount of the raw material polyester-based resin and the raw material polyimide-based resin, the type and the amount of the crosslinking agent, and the like.

The number average molecular weight Mn, the mass average molecular weight Mw, and the Z-average molecular weight Mz of the molded body of foamed particles can be regarded as the same as the number average molecular weight Mn, the mass average molecular weight Mw, and the Z-average molecular weight Mz of the thermoplastic resin constituting the molded body of foamed particles.

In the molded body of foamed particles, the temperature at which the loss tangent tanδ is maximized in the solid viscoelasticity measurement at a heating rate of 5°C/min and a frequency of 1 Hz is preferably 120°C to 230°C, more preferably 130°C to 225°C, and still more preferably 150°C to 220°C. When the temperature at which the loss tangent tan δ is maximized is equal to or higher than the above-described lower limit value, the temperature at which the molded body of foamed particles is softened is increased, and the heat-resistant strength of the molded body of foamed particles is further increased. When the temperature at which the loss cotangent tanδ is maximized is equal to or less than the above-described upper limit value, the temperature at which the molded body of foamed particles is softened is not excessively high, and moldability is further enhanced.

The open cell ratio of the molded body of foamed particles is, for example, preferably 20% or less, more preferably 18% or less, and still more preferably 16% or less. When the open cell ratio of the molded body of foamed particles is equal to or less than the above-described upper limit value, the impact resistance of the molded body of foamed particles is further enhanced. The open cell ratio of the molded body of foamed particles is determined by the method described in JIS K7138:2006 "Rigid Cellular Plastics - Determination of the Volume Percentage of Open Cells and of Closed Cells".

The apparent density of the molded body of foamed particles is, for example, preferably 0.027 to 0.675 g/cm$^3$, more preferably 0.045 to 0.45 g/cm$^3$, and still more preferably 0.0675 to 0.27 g/cm$^3$ When the apparent density of the molded body of foamed particles is equal to or greater than the above-described lower limit value, the impact resistance of the molded body of foamed particles is further enhanced. When the apparent density of the molded body of foamed

particles is equal to or less than the above-described upper limit value, the molded body of foamed particles can be made lighter.

The foaming ratio of the molded body of foamed particles is, for example, preferably 2 to 50 times, more preferably 3 to 30 times, and still more preferably 5 to 20 times. When the foaming ratio of the molded body of foamed particles is equal to or greater than the above-described lower limit value, the impact resistance of the molded body of foamed particles is further enhanced. When the foaming ratio of the molded body of foamed particles is equal to or less than the above-described upper limit value, the mechanical strength of the molded body of foamed particles is further enhanced.

The average cell diameter of the molded body of foamed particles is, for example, preferably 5.0 to 500 μm, more preferably 10 to 400 μm, and still more preferably 20 to 300 μm.

When the average cell diameter of the molded body of foamed particles is equal to or greater than the above-described lower limit value, the impact resistance of the molded body of foamed particles is further enhanced. When the average cell diameter of the molded body of foamed particles is equal to or less than the above-described upper limit value, the surface smoothness of the molded body of foamed particles is further enhanced.

The average cell diameter of the molded body of foamed particles can be measured according to the method described in ASTM D2842-69.

With regard to the molded body of foamed particles, the flame retardance (flame retardant grade of UL94 standards) measured in accordance with the UL-94 vertical method (11 mm vertical burning test) is preferably V-2 or higher, more preferably V-1 or higher, and still more preferably V-0.

The flame retardant grade of the molded body of foamed particles can be adjusted by the amount of the polyimide-based resin, the amount of the phosphorus-based flame retardant, and the like.

For example, when the amount of the polyimide-based resin with respect to the total mass of the thermoplastic resin is set to 25% by mass or more, flame retardance can be further enhanced, and a grade of V-1 or higher can be more reliably obtained.

**In** the flame retardant grade of the UL94 standards, flame retardance increases in the order of V-2, V-1, and V-0.

Furthermore, examples of the UL-94 vertical method (11 mm vertical burning test) include the method described in "Material Combustibility Test Intended for Fire Safety Evaluation" by Aki Hosogai, et al., Journal of the Combustion Society of Japan, Vol. 56, No. 175, 2014, pp. 47-58.

<Production method>

A molded body of foamed particles using foamed particles can be produced by a conventionally known production method.

Examples of the production method for a molded body of foamed particles include the following methods.

1) A method that includes filling a molding mold with foamed particles (bulk foaming ratio: 2 to 50 times), heating these foamed particles to subject them to secondary foaming to obtain secondary foamed particles while fusion-bonding the particles, and producing a molded body of foamed particles (foaming ratio: 2 to 50 times) by in-mold foam molding (heating and molding step).

2) A method that includes heating foamed particles to obtain pre-foamed particles that have been foamed to any bulk foaming ratio (bulk foaming ratio: 2 to 50 times) (pre-foaming step), filling a mold with the pre-foamed particles, heating these pre-foamed particles to subject them to secondary foaming to obtain secondary foamed particles while fusion-bonding the particles, and producing a molded body of foamed particles (foaming ratio: 2 to 50 times) by in-mold foam molding (heating and molding step).

Examples of the method of performing secondary foaming include a method of heating the inside of the cavity of the mold with steam.

The temperature for performing secondary foaming is preferably, for example, 100°C to 180°C.

The time for performing secondary foaming (that is, time for supplying vapor to the mold) is preferably 5 to 120 seconds.

In the secondary foaming, steam may be supplied into the cavity from the female mold side, steam may be supplied into the cavity from the male mold side, or these may be alternately performed.

In addition, the foamed particles may be impregnated with an inert gas or air (hereinafter, referred to as an inert gas or the like) to increase the secondary foamability of the foamed particles (internal pressure applying step). Examples of the inert gas include carbon dioxide, nitrogen, helium, and argon.

Examples of a method of impregnating the foamed particles with an inert gas or the like include a method that includes impregnating the foamed particles with an inert gas or the like by placing the foamed particles in an atmosphere of the inert gas or the like having a pressure equal to or higher than normal pressure. The foamed particles may be

impregnated with an inert gas or the like before being filled in the mold; however, the foamed particles may also be impregnated by filling the mold with the foamed particles and then placing the foamed particles together with the mold in an atmosphere of an inert gas or the like. When the inert gas is nitrogen, the foamed particles may be left to stand in a nitrogen atmosphere at a gauge pressure (based on atmospheric pressure) of 0.1 to 2 MPa for 20 minutes to 24 hours.

The crystallinity of the thermoplastic resin may be further increased by further heating the molded body of foamed particles in the mold after the heating and molding step (heat retention step).

<Applications of molded body of foamed thermoplastic resin particles>

The molded body of foamed thermoplastic resin particles of the present invention is suitable for, for example, electrical parts of motorcycles, electric bicycles, and automobiles, and heat-resistant parts for automobiles. Among them, the molded body of foamed thermoplastic resin particles is suitably used as an internal parts of hard disks requiring precision molding, electrical parts of motorcycles, electric bicycles, and automobiles.

Examples of the electrical parts of motorcycles, electric bicycles, and automobiles include a cell case and a battery case.

Suitable examples of the heat-resistant parts for automobiles include parts such as an alternator terminal, an alternator connector, an IC regulator, a potentiometer base for a light dimmer, various valves such as an exhaust gas valve, an engine cooling water joint, a carburetor main body, a carburetor spacer, an exhaust gas sensor, a cooling water sensor, an oil temperature sensor, a brake pad wear sensor, a throttle position sensor, a crankshaft position sensor, an air flow meter, a brake pad wear sensor, a thermostat base for an air conditioner, a heating hot air flow control valve, a brush holder for a radiator motor, a water pump impeller, a turbine vein, a windshield wiper motor-related component, a distributor, a starter switch, a starter relay, a wire harness for a transmission, a window washer nozzle, an air conditioner panel switch substrate, a coil for a fuel-related electromagnetic valve, a connector for a fuse, a horn terminal, an electrical component insulating plate, a step motor rotor, a brake piston, a solenoid bobbin, and an ignition device case; a wheel cap, a lamp socket, a lamp housing, a lamp extension, and a lamp reflector.

(Foamed resin composite)

A foamed resin composite has the molded body of foamed particles of the present invention and a fiber-reinforced resin layer (skin material) provided on at least a portion of the surface of the molded body of foamed particles.

The foamed resin composite has excellent heat resistance and mechanical strength, and can be widely used as a transport equipment construction member. In addition, the foamed resin composite can also be suitably used as a building material, a wind turbine blade, a robot arm, a housing for an electrical product, a cushioning material for a helmet, an agricultural product box, a transport container such as a thermally insulated container, a rotor blade for an industrial helicopter, and a packaging material for parts.

Examples of the transport equipment construction member include structural members constituting the main bodies of transport equipment such as automobiles, railway vehicles, aircraft, and marine vessels. Examples of the structural member constituting the main body of an automobile include a door panel, a door inner, a bumper, a fender, a fender support, an engine cover, a roof panel, a trunk lid, a floor panel, a center tunnel, a crash box, and a cowl. For example, when a resin composite material is used for a door panel that has been conventionally manufactured from a steel plate, the door panel has substantially the same rigidity as a door panel made of a steel plate and can be significantly lightened, and therefore, weight reduction of an automobile can be attempted. Examples of the structural member constituting the main body of a railway vehicle include a back shell, a table, a leg rest, a wall panel, and a floor panel.

For example, the foamed resin composite 100 in FIG. 7 has a flat plate-shaped molded body of foamed particles (foamed layer) 102 and fiber-reinforced resin layers 104 provided on both surfaces of the molded body of foamed particles 102.

The foamed layer 102 is the above-described molded body of foamed particles of the present invention.

The fibers constituting the fiber-reinforced resin layer 104 are not particularly limited, and examples thereof include carbon fibers, glass fibers, aramid fibers, boron fibers, and metal fibers. Among these, carbon fibers, glass fibers, and aramid fibers are preferred, and carbon fibers are more preferred, from the viewpoint of having excellent mechanical strength and heat resistance.

The form of the fiber is not particularly limited, and examples thereof include a woven fabric, a knitted fabric, a nonwoven fabric, and a face material obtained by bundling (stitching) fiber bundles (strands) in which fibers are aligned in one direction, with a stitched thread such as a synthetic resin thread of a polyamide resin or a polyester resin, or a glass fiber thread. Examples of a method of weaving a fabric include plain weave, twill weave, and satin weave.

The fibers may be: (1) a multilayer face material formed by laminating a plurality of sheets of a woven fabric, a knitted fabric, or a nonwoven fabric together or in any combination thereof; or (2) a multilayer face material formed by bundling (stitching) fiber bundles (strands) in which fibers are aligned in one direction, with a stitch thread such as a

synthetic resin thread of a polyamide resin or a polyester resin, or a glass fiber thread, superposing the plurality of sheets of face materials such that the fiber directions of the fiber bundles are oriented in different directions, and integrating (stitching) the superposed face materials together with a stitch thread such as a synthetic resin thread of a polyamide resin or a polyester resin, or a glass fiber thread.

Examples of the resin contained in the fiber-reinforced resin layer 104 include an uncured thermosetting resin and a thermoplastic resin. The thermosetting resin is not particularly limited, and examples thereof include an epoxy resin, an unsaturated polyester resin, a phenol resin, a melamine resin, a polyurethane resin, a silicon resin, a maleimide resin, a vinyl ester resin, a cyanic acid ester resin, and a resin obtained by pre-polymerizing a maleimide resin and a cyanic acid ester resin. An epoxy resin and a vinyl ester resin are preferred since they are excellent in terms of heat resistance, elastic modulus, and chemical resistance. The thermosetting resin may contain additives such as a curing agent and a curing accelerator. The thermosetting resin may be used singly, or two or more kinds thereof may be used in combination.

The thermoplastic resin is not particularly limited, and examples thereof include a polyolefin-based resin such as a polyethylene-based resin or a polypropylene-based resin, an acrylic resin, a polyester-based resin, a polyamide-based resin, and a polycarbonate-based resin.

The amount of the resin in the fiber-reinforced resin layer 104 is preferably 20% to 70% by mass, and more preferably 30% to 60% by mass, with respect to the total mass of the fiber-reinforced resin layer 104. When the amount of the resin is equal to or greater than the above-described lower limit value, the binding between the fibers is further enhanced, and the mechanical strength of the obtained foamed resin composite is further enhanced. When the amount of the resin is equal to or less than the above-described upper limit value, the amount of the resin present between the fibers is not excessively increased, the mechanical strength of the fiber-reinforced resin layer 104 is further increased, and the mechanical strength of the resulting foamed resin composite is further increased.

The method of impregnating fibers with a resin is not particularly limited, and examples thereof include: (1) a method that includes immersing the fibers in the resin; and (2) a method that includes applying the resin on the fibers.

In the present embodiment, the materials of the fiber-reinforced resin layers located on both surfaces of the molded body of foamed particles may be identical with or different from each other.

The thickness of the fiber-reinforced resin layer 104 is, for example, preferably 0.10 to 5.0 mm, and more preferably 0.30 to 3.0 mm. When the thickness of the fiber-reinforced resin layer 104 is equal to or greater than the above-described lower limit value, the mechanical strength of the foamed resin composite 100 is further increased. When the thickness of the fiber-reinforced resin layer 104 is equal to or less than the above-described upper limit value, further weight reduction of the foamed resin composite 100 can be attempted.

In the present embodiment, the thicknesses of the fiber-reinforced resin layers 104 located on both surfaces of the molded body of foamed particles 102 may be identical with or different from each other.

<Production method>

The method for providing the fiber-reinforced resin layer 104 on the surface of the molded body of foamed particles 102 is not particularly limited, and examples thereof include: (1) a method that includes laminating the fiber-reinforced resin layer 104 on the surface of the molded body of foamed particles 102, with an adhesive interposed therebetween, and joining the fiber-reinforced resin layer 104 to the surface of the molded body of foamed particles 102; (2) a method that includes laminating the fiber-reinforced resin layer 104 impregnated with a thermoplastic resin on the surface of the molded body of foamed particles 102, and joining the fiber-reinforced resin layer 104 to the surface of the molded body of foamed particles 102 using the thermoplastic resin as a binder; (3) a method that includes laminating the fiber-reinforced resin layer 104 impregnated with an uncured thermosetting resin on the surface of the molded body of foamed particles 102, and joining the fiber-reinforced resin layer 104 to the molded body of foamed particles 102 using a cured product of the thermosetting resin as a binder; and (4) a method that includes laminating the fiber-reinforced resin layer 104 in a softened state by heating on the surface of the molded body of foamed particles 102, and pressing the fiber-reinforced resin layer 104 against the surface of the molded body of foamed particles 102 to join the fiber-reinforced resin layer 104 to the molded body of foamed particles 102. In the method (4), it is also possible to deform the fiber-reinforced resin layer 104 along the surface of the molded body of foamed particles 102. Here, since the molded body of foamed particles 102 of the present invention has excellent load resistance in a high temperature environment, the method (4) can also be suitably used.

By these methods, the fiber-reinforced resin layer 104 is integrally provided on the surface of the molded body of foamed particles 102.

Examples of a method of joining the fiber-reinforced resin layer 104 to the surface of the molded body of foamed particles 102 include an autoclave method, a hand lay-up method, a spray-up method, a Prepreg Compression Molding (PCM) method, a Resin Transfer Molding (RTM) method, and a Vacuum assisted Resin Transfer Molding (VaRTM) method.

The foamed resin composite of the above-described embodiment has a flat plate-shaped molded body of foamed

particles; however, the present invention is not limited to this, and the shape of the molded body of foamed particles can be appropriately selected depending on the application. That is, the shape of the foamed resin composite can be appropriately selected depending on the application.

In the above-described embodiment, fiber-reinforced resin layers are provided on both surfaces of the molded body of foamed particles; however, the present invention is not limited to this, and the fiber-reinforced resin layer may be provided only on one surface of the molded body of foamed particles, or the fiber-reinforced resin layer may be provided only on a portion of the surface of the molded body of foamed particles.

Since the molded body of foamed particles of the present embodiment contains a polyester-based resin, heat resistance is enhanced by enhancing the dimensional stability under heat.

Since the foamed particles of the present embodiment contain a polyimide-based resin, the glass transition temperature Tg is increased, and the heat-resistant strength is increased. For this reason, a molded body of foamed particles obtained by heat molding the foamed particles has excellent heat-resistant strength.

In addition, since the amount of the polyimide-based resin in the molded body of foamed particles of the present embodiment is in a specific range, the molded body of foamed particles has excellent moldability while having increased heat-resistant strength.

Furthermore, since the molded body of foamed particles of the present embodiment contains a specific amount of the phosphorus-based flame retardant, the molded body of foamed particles has excellent flame retardance and excellent moldability.

In one preferred aspect of the foamed thermoplastic resin particles or the molded body of foamed thermoplastic resin particles of the present invention,

the amount of the polyimide-based resin is 30% to 40% by mass with respect to the total mass of the thermoplastic resin,
the phosphorus content is 0.30% to 0.66% by mass with respect to the total mass of the thermoplastic resin, and
the crystallinity of the foamed thermoplastic resin particles is 3.3% to 6.3%.

In addition, in this aspect, the open cell ratio of the foamed thermoplastic resin particles is more preferably 3.4% to 16%.

According to the above-described aspect, particularly excellent moldability, dimensional change rate under heat, burning test, and flame retardance.

Examples

Hereinafter, the present invention will be described with reference to Examples; however, the present invention is not limited thereto.

(Raw materials used)

<Polyester-based resin>

- PET (A): manufactured by Lotte Chemical Corporation, trade name "BCB80", glass transition temperature Tg: 78.7°C, melting point: 247.2°C, IV value: 0.80, biomass degree: 30%.
- PET (B): manufactured by Mitsui Chemicals, Inc., trade name "SA-135", glass transition temperature Tg: 75.0°C, melting point: 247.0°C, IV value: 0.82, biomass degree: 0%.

<Polyimide-based resin>

· PET (A): polyetherimide, manufactured by SABIC Innovative Plastics Corporation, trade name "Ultem 1000", glass transition temperature Tg: 217°C, MFR: 9 g/10 min.

<Phosphorus-based flame retardant>

- Flame retardant (a): flame retardant-containing PET masterbatch, manufactured by Toyocolor Co., Ltd., trade name "NF POLY 1450 MB", phosphorus content: 4.4% by mass.

· Flame retardant (b): flame retardant-containing PET masterbatch, manufactured by Toyocolor Co., Ltd., trade name "NF POLY 1477 MB", phosphorus content: 3.0% by mass.
· Flame retardant (c): flame retardant, manufactured by Teijin Limited, trade name "FIREGUARD FCX-210", phosphorus content: 15% by mass.

<Talc master batch>

· Nucleating agent MB: Masterbatch composed of 58% by mass of PET and 42% by mass of talc.

<Crosslinking agent>

· PMDA: pyromellitic anhydride.

<Foaming agent>

· Butane: mixture of isobutane and normal butane. Isobutane:normal butane = 35:65 (mass ratio).

(Evaluation Methods)

<Density>

<<Bulk density of foamed particles>>

The bulk density of the foamed particles was measured in accordance with JIS K6911:1995 "Testing methods for thermosetting plastics". The measurement was performed using an apparent density measuring instrument conforming to JIS K6911, and the bulk density of the foamed particles was determined based on the following Expression (s1).

Bulk density (g/$cm^3$) of foamed particles = [mass (g) of graduated cylinder containing foamed particles - mass (g) of graduated cylinder]/[capacity ($cm^3$) of graduated cylinder] ... (s1) (s1)

<<Density of molded body of foamed particles>>

The density of the molded body of foamed particles was measured by the method described in JIS K 7222:1999 "Cellular plastics and rubbers - Determination of apparent density". The molded body of foamed particles having a size of 100 $cm^3$ or more was cut in a manner so as not to change the original cell structure of the material, and the mass thereof was measured. The density was calculated by the following Expression (s2).

Density (g/$cm^3$) = mass of molded body of foamed particles (g)/volume of molded body of foamed particles ($cm^3$)... (s2) (s2)

<Foaming ratio>

<<Foamed particles>>

The bulk foaming ratio of the foamed particles was defined as a value obtained by determining the density of the thermoplastic resin from the blending proportion of each example, and dividing the density of the thermoplastic resin by the bulk density of the obtained foamed particles. The following values were used as the respective densities of the resins.

· PET: 1.35 g/$cm^3$.
· PEI: 1.28 g/$cm^3$.
· Flame retardant MB: 1.35 g/$cm^3$.

<<Molded body of foamed particles>>

The foaming ratio of the molded body of foamed particles was defined as a value obtained by determining the density of the thermoplastic resin from the blending proportion of each example, and dividing the density of the thermoplastic resin by the density of the obtained molded body of foamed particles. The following values were used as the respective densities of the resins.

· PET: 1.35 g/cm$^3$.
· PEI: 1.28 g/cm$^3$.
· Flame retardant MB: 1.35 g/cm$^3$.

<Open cell ratio>

The open cell ratio of the foamed particles was measured by the following method. First, a sample cup of a volumetric air comparison type specific gravity meter was prepared, and the total mass A (g) of foamed particles in a volume filling about 80% of this sample cup was measured. Next, the volume B (cm$^3$) of the entire foamed particles was measured by a 1-1/2-1 atmospheric pressure method using a specific gravity meter. The measurement was performed using a "Volumetric Air Comparison Type Specific Gravity Meter Model 1000 " manufactured by Tokyo Science Co., Ltd.
A container made of a wire mesh was prepared, and this container made of a wire mesh was immersed in water. The mass C (g) of the container made of a wire mesh in a state of being immersed in water was measured. All the foamed particles were placed in this container made of a wire mesh, this container made of a wire mesh was immersed in water, and the mass D (g) combining the container made of a wire mesh in a state of being immersed in water and the total amount of the foamed particles placed in this container made of a wire mesh was measured. For the mass measurement of the foamed particles and the container made of a wire mesh, an "Electronic balance HB3000" (minimum scale 0.01 g) manufactured by Yamato Scale Co., Ltd. was used.
Then, the apparent volume E (cm$^3$) of the foamed particles was calculated based on the following expression, and the open cell ratio of the foamed particles was calculated by the following Expression (s3) based on this apparent volume E and the volume B (cm$^3$) of the entire foamed particles. The volume of 1 g of water was set to 1 cm$^3$. Furthermore, in the present measurement, the foamed particles were stored in advance in an environment according to JIS K 7100-1999 symbol 23/50, grade 2 for 16 hours, and then measurement was made in the same environment.

$$\text{Open cell ratio (\%)} = 100 \times (E - B)/E \ldots (s3)$$

$$(E = A + (C - D))$$

<Glass transition temperature Tg>

The glass transition temperature Tg was measured by the methods described in JIS K7121:1987 and JIS K7121:2012. However, the sampling method and the temperature conditions were as follows.
5.5 ± 0.5 mg of a sample cut out from the foamed particles or the molded body of foamed particles was filled in a measurement container made of aluminum such that the sample was placed on the bottom without leaving empty space, and then the container was covered with a lid made of aluminum. Next, differential scanning calorimetry was performed using a "DSC7000X, AS-3" differential scanning calorimeter manufactured by Hitachi High-Tech Science Corporation. The sample was heated and cooled by the following steps 1 to 4 under a nitrogen gas flow rate of 20 mL/min to obtain a DSC curve.

(Step 1) The sample is held at 30°C for 2 minutes.
(Step 2) The temperature is raised from 30°C to 300°C at a rate of 10°C/min (first temperature raising process) and held for 10 minutes.
(Step 3) The sample is quickly taken out and allowed to cool in an environment at 25 ± 10°C.
(Step 4) The temperature is raised from 30°C to 300°C at a rate of 10°C/min (second temperature raising process).

Alumina was used as a reference substance. Using the analysis software attached to the apparatus, the temperatures of the tops of the melting peak and the crystallization peak observed in the second temperature raising process were read and used as the melting point and the crystallization temperature. The glass transition temperature Tg was calculated as midpoint glass transition temperature from the DSC curve observed in the second temperature raising process using the analysis software attached to the apparatus. This midpoint glass transition temperature was determined according to the Standard (9.3).
In addition, regarding the glass transition temperature Tg, a glass transition temperature Tg on a lower temperature side with respect to the crystallization peak observed in the second temperature raising process in a heat flux differential scanning calorimetry chart (DSC curve) at a heating rate of 10°C/min, was adopted. However, in a case where no crystallization peak was observed in the second temperature raising process, the glass transition temperature Tg in the temperature range (30°C to 300°C) in the second temperature raising process was adopted.

<Amount of heat absorption (a), amount of heat generation (b), crystallinity>

The amount of heat absorption (a) (amount of heat of fusion) and the amount of heat generation (b) (amount of heat of crystallization) were measured by the methods described in JIS K7121:1987 and JIS K7121:2012. However, the sampling method and the temperature conditions were as follows.

5.5 ± 0.5 mg of a sample cut out from the foamed particles or the molded body of foamed particles was filled in a measurement container made of aluminum such that the sample was placed on the bottom without leaving empty space, and then the container was covered with a lid made of aluminum. Next, differential scanning calorimetry was performed using a "DSC7000X, AS-3" differential scanning calorimeter manufactured by Hitachi High-Tech Science Corporation. The sample was heated and cooled by the following steps 1 and 2 under a nitrogen gas flow rate of 20 mL/min to obtain a DSC curve.

(Step 1) The sample is held at 30°C for 2 minutes.
(Step 2) The temperature is raised from 30°C to 300°C at a rate of 10°C/min (first temperature raising process).

Alumina was used as a reference substance in this case. The amount of heat absorption (a) and the amount of heat generation (b) were calculated using the analysis software attached to the apparatus. Specifically, as shown in FIG. 4, the amount of heat absorption (a) was calculated from the area of the portion surrounded by the DSC curve and a straight line connecting a point at which the DSC curve departed from the baseline on the low temperature side and a point at which the DSC curve returned to the baseline on the high temperature side. The amount of heat generation (b) was calculated from the area of the portion surrounded by the DSC curve and a straight line connecting a point at which the DSC curve departed from the baseline on the low temperature side and a point at which the DSC curve returned to the high temperature side.

The crystallinity is determined by the following method. First, the difference between the amount of heat absorption (a) and the amount of heat generation (b) is determined. The proportion determined by dividing this difference by the theoretical amount of heat of fusion of 140.1 J/g of completely crystallized polyethylene terephthalate, is defined as the crystallinity.

That is, the crystallinity is determined by the following Expression (s4).

$$\text{Crystallinity (\%)} = (\text{Amount of heat absorption (a) (J/g)} - \text{amount of heat generation (b) (J/g)})/140.1\ (\text{J/g}) \times 100 \cdots (s4) \qquad (s4)$$

<Phosphorus content>

The phosphorus content in the foamed particles or the molded body of foamed particles was determined by an order analysis method of fluorescent X-ray analysis. The intensity of phosphorus was measured under the following conditions using a "ZSX Primus IV" fluorescent X-ray measuring apparatus manufactured by Rigaku Corporation, and the phosphorus content with respect to the total mass of the thermoplastic resin was determined by the order analysis method. About 0.5 g of the measurement target was formed into a thin film using a heat press molding machine, and the thin film was placed in a 30 mmφ sample case attached to the apparatus to prepare a measurement sample.

<<Apparatus conditions>>

· Apparatus: ZSX Primus IV.
· X-ray tube target: Rh.
· Measured diameter: 30 mm.
· Spin: not performed.
· Atmosphere: vacuum.
· Sample form: metal.
· Balance component: $C_{30}H_{23}O_8N$.
· Sample film: None.
· Sample weight thickness: to be set.

<<Qualitative element conditions>>

- P-Kα.
- Tube: Rh (30 kV - 100 mA).
- Filter: Be30.
- Attenuator: 1/1.
- Slit: S4.
- Spectral crystal: GeH.
- 2θ: 141.2 deg (measurement range: 137 to 144 deg).
- Detector: PC.
- PHA: 150 to 300.
- Step: 0.05 deg.
- Time: 0.15 sec.

<Flame retardance>

Flame retardance was measured according to the method described in the vertical burning test (V) described in UL94: 1996. A test piece having a size of 125 mm in length × 13 mm in width × 11 mm in thickness (having a skin layer only in the thickness direction) was cut out from a foamed molded body molded from foamed particles to a size of 300 mm in length × 400 mm in width × 11 mm in height, and was used for measurement. The test piece was subjected to state adjustment under the conditions of ASTM D618 and then used for measurement. Measurement was performed in an environment at a temperature of 10°C to 35°C and a humidity of 45% to 75%, and flame retardance was evaluated according to the vertical burning test (V) described in UL94:1996.

<<Evaluation Criteria>>

A: The result of the burning test is V-0.
B: The result of the burning test is V-1.
C: The result of the burning test is V-2.
D: The result of the burning test is not V-0 to V-2 (incompatible).

<Dimensional change rate under heat (heat resistance)>

The dimensional change rate under heat of the molded body of foamed particles was measured by method B described in JIS K6767:1999 "Cellular plastics - polyethylene - methods of test". A test piece having a planar shape of a square with one side measuring 150 mm and a thickness equal to the thickness of the molded body of foamed particles, was cut out from the molded body of foamed particles. Three 100-mm straight lines parallel to each other were drawn at an interval of 50 mm in the vertical direction and the horizontal direction at the center part of the above-described test piece. The lengths of the three straight lines in each of the vertical direction and the horizontal direction were measured, and an arithmetic mean value L0 thereof was defined as the initial dimension. Thereafter, the test piece was left to stand in a hot air circulation type dryer set to 180°C for 168 hours, and then a heating test was carried out. After the heating test, the test piece was taken out, and the test piece was left to stand at 25°C for 1 hour. Next, the lengths of the three straight lines in each of the vertical direction and the horizontal direction, which had been drawn on the surface of the test piece, were measured, and an arithmetic mean value L1 thereof was defined as the dimension after heating. The dimensional change rate under heat was calculated based on the following Expression (s5).

$$\text{Dimensional change rate under heat (\%)} = 100 \times |(L1 - L0)|/L0 \quad \ldots \text{(s5)}$$

The results of the measurement of the dimensional change rate under heat of the molded body of foamed particles at each set temperature were evaluated according to the following criteria.

<<Determination Criteria>>

A: The dimensional change rate under heat was less than 1.0%.
B: The dimensional change rate under heat was 1.0% or more and less than 2.0%.

C: The dimensional change rate under heat was 2.0% or more.

<Moldability >

The surface of the molded body of foamed particles was checked by visual inspection and was evaluated according to the following determination criteria.

<<Determination Criteria>>

A: There is no gap between the foamed particles, the surface of the molded body is extremely smooth, and the appearance of the molded body is very good.
B: The gaps between the foamed particles are very small, the surface of the molded body is almost smooth, and the appearance of the molded body is satisfactory.
C: The gaps between the foamed particles are small, the surface of the molded body has small unevenness, and the appearance of the molded body is somewhat poor.
D: There are a large number of gaps between the foamed particles, the surface of the molded body has large unevenness, or significant shrinkage is observed during molding, and the appearance of the molded body is significantly poor.

<Overall evaluation>

The evaluation results for the moldability, the dimensional change rate under heat, the burning test, and the flame retardance were classified according to the following evaluation criteria.

<<Evaluation Criteria>>

A: The rating was "A" in all evaluations.
B: In each evaluation, the rating was "A" or "B" in all evaluations, and at least one rating was "B".
C: In each evaluation, the rating was "A", "B", or "C" in all evaluations, and at least one rating was "C".
D: In each evaluation, at least one rating was "D".

(Example 1)

Foamed particles were produced by the following procedure using a production apparatus similar to the foamed particle production apparatus 10 shown in FIG. 4 to FIG. 6.

First, according to the formulations in the table, a polyester-based resin, a polyimide-based resin, a phosphorus-based flame retardant, a talc master batch, and a crosslinking agent were supplied to a single-screw extruder having a cylinder diameter D of 65 mm and an L (cylinder length)/D (cylinder diameter) ratio of 34, and these were melt-kneaded at 290°C. Subsequently, from the middle of the extruder, butane (isobutane:normal butane = 35:65 (mass ratio)) as a foaming agent was injected into the melt-kneaded product in a molten state in the amount shown in the table, and was uniformly dispersed in the melt-kneaded product to obtain a resin composition. Thereafter, the resin composition in a molten state was heated to 300°C at the front end part of the extruder, and then the resin composition was extrusion-foamed from each nozzle of a multi-nozzle type nozzle die 1 attached to the front end of the extruder. The extrusion amount of the resin composition was set to 36 kg/h.

The nozzle die 1 had fifty nozzles having a diameter of 0.8 mm at the outlet part 11, and all the outlet parts 11 were positioned at equal intervals on an imaginary circle A having a diameter of 139.5 mm. In addition, two rotary blades 5 were integrally provided on the outer peripheral surface of the rear end part of the rotation shaft 2 with a phase difference of 180° in the circumferential direction of the ratation shaft 2, and each rotary blade 5 was configured to move on an imaginary circle A in a state of being constantly in contact with the front end surface 1a of the nozzle die 1.

The cooling member 4 included a cooling drum 41 composed of a front part 41a having a front circular shape and a cylindrical peripheral wall part 41b that extended backward from the outer peripheral edge of the front part 41a and had an inner diameter of 320 mm. Then, a cooling liquid 42 at 20°C was supplied into the cooling drum 41 through the supply pipe 41d and the supply port 41c of the cooling drum 41. The internal volume of the cooling drum 41 was 17,684 $cm^3$.

The cooling liquid 42 advanced forward in spirally along the inner peripheral surface of the peripheral wall part

41b of the cooling drum 41 due to a centrifugal force generated by the flow speed when the cooling liquid 42 was supplied from the supply pipe 41d to the inner peripheral surface of the peripheral wall part 41b of the cooling drum 41. The cooling liquid 42 gradually spread in a direction orthogonal to the traveling direction while traveling along the inner peripheral surface of the peripheral wall part 41b, and completely covered the entire inner peripheral surface of the peripheral wall part 41b in front of the supply port 41c of the cooling drum 41.

The rotary blades 5 disposed on the front end surface 1a were rotated at a rotation rate of 3,400 rpm, and the extruded foamed body extrusion-foamed from the outlet part 11 of each nozzle of the nozzle die 1 was cut by the rotary blades 5 to produce substantially spherical particulate cut objects. The extruded foamed body was composed of an unfoamed part immediately after being extruded from the nozzle of the nozzle die 1, and a foamed part that was in the process of foaming, which was continuous with the unfoamed part. Then the extruded foamed body was cut at the opening end of the outlet part 11 of the nozzle, and cutting of the extruded foamed body was carried out in the unfoamed part.

Upon the production of the above-described foamed particles, first, the rotation shaft 2 was not attached to the nozzle die 1, and the cooling member 4 was retracted from the nozzle die 1. In this state, it was checked that the resin composition was extrusion-foamed from the extruder to form an extruded foamed body, and the extruded foamed body was composed of an unfoamed part immediately after being extruded from the nozzle of the nozzle die 1 and a foamed part that was in the process of foaming, which was continuous with the unfoamed part. Next, after the rotation shaft 2 was attached to the nozzle die 1 and the cooling member 4 was disposed at a predetermined position, the rotation shaft 2 was rotated, and the extruded foamed body was cut with the rotary blades 5 at the opening end of the outlet part 11 of the nozzle to produce particulate cut objects.

These particulate cut objects were blown outward or forward by the cutting stress of the rotary blades 5, and collided with the cooling liquid 42 flowing along the inner surface of the cooling drum 41 of the cooling member 4, from a direction oblique to the surface of the cooling liquid 42 so as to follow the cooling liquid 42 from the upstream side to the downstream side of the flow of the cooling liquid 42, the particulate cut objects entered the cooling liquid 42 and were immediately cooled, and thereby foamed particles were produced.

The obtained foamed particles were discharged together with the cooling liquid 42 through the discharge port 41e of the cooling drum 41, and then were separated from the cooling liquid 42 by a dewaterer.

An in-mold foam molding machine including a mold (a male mold and a female mold) was prepared. Two types of molds were used according to the evaluation items. The two types of molds are a mold A in which a cavity having an inner dimension of 300 mm in length × 400 mm in width × 30 mm in height and having a rectangular parallelepiped shape is formed between a male mold and a female mold in a state where the male mold and the female mold are clamped, and a mold B in which a cavity having an inner dimension of 300 mm in length × 400 mm in width × 11 mm in height and having a rectangular parallelepiped shape is formed.

In the mold A, the mold was filled with the foamed particles in a state where the mold cracking was set to 3 mm. In the mold B, the mold was filled with the foamed particles in a state where the mold cracking was set to 1 mm. After filling the mold with the foamed particles, steam was introduced from the female mold for 60 seconds such that the pressure inside the cavity was 0.30 MPa (gauge pressure) (one-side heating), subsequently steam was introduced from the male mold for 45 seconds such that the pressure inside the cavity was 0.30 MPa (gauge pressure) (reverse one-side heating), subsequently steam was supplied from both the male mold and the female mold for 60 seconds such that the pressure inside the cavity was 0.33 MPa (gauge pressure) (double-side heating), the foamed particles were heated and subjected to secondary foaming, and the secondary foamed particles were thermally fusion-bonded and integrated with each other. Thereafter, the mold was held for 110 seconds in a state where the introduction of steam into the cavity was stopped (heat retention step), finally a cooling liquid was supplied into the cavity to cool the molded body of foamed particles in the mold, and then the cavity was opened to take out the molded body of foamed particles.

The moldability and the dimensional change rate under heat of the molded body of foamed particles molded using the mold A were evaluated. The burning test and the flame retardance were evaluated for the molded body of foamed particles molded using the mold B. An overall evaluation was performed based on those results, and the results are shown in the tables.

(Examples 2 to 20 and Comparative Examples 1 to 4)

Foamed particles and molded bodies of foamed particles were produced in the same manner as in Example 1, except that the polyester-based resin, the polyimide-based resin, the talc master batch, the phosphorus-based flame retardant, the crosslinking agent, and the foaming agent were formulated as shown in the tables, and the molding conditions were set as shown in Tables 2 to 7.

For the obtained foamed particles or molded bodies of foamed particles, evaluations for moldability, dimensional change rate under heat, burning test, and flame retardance, and an overall evaluation were carried out, and the results are shown in the tables. In Comparative Examples 3 and 4, since the moldability was "D" and a molded body of foamed particles for evaluation could not be obtained, the evaluations for the dimensional change rate under heat, the burning test,

and the flame retardance were not performed.

[Table 2]

| | | | | Example 1 | Example 2 | Example 3 | Example 4 | Example 5 |
|---|---|---|---|---|---|---|---|---|
| Raw material | PET | (A) | Parts by mass | 57.9 | 52.9 | 50.8 | 47.8 | 52.8 |
| | | (B) | Parts by mass | - | - | - | - | - |
| | PEI | (A) | Parts by mass | 30.0 | 30.0 | 40.0 | 40.0 | 40.0 |
| | Nucleating agent MB | PET | Parts by mass | 1.0 | 1.0 | 1.0 | 1.0 | 1.0 |
| | | Talc | Parts by mass | 0.76 | 0.76 | 0.76 | 0.76 | 0.76 |
| | Flame retardant (a) | | Parts by mass | 10 | 15 | 7.0 | 10 | 5.0 |
| | Flame retardant (b) | | Parts by mass | - | - | - | - | - |
| | Flame retardant (c) | | Parts by mass | - | - | - | - | - |
| | PMDA | | Parts by mass | 0.34 | 0.34 | 0.36 | 0.36 | 0.36 |
| | Butane | | Parts by mass | 1.2 | 1.2 | 1.2 | 1.2 | 1.2 |
| Physical properties of foamed particles | Bulk density | | $g/cm^3$ | 0.15 | 0.17 | 0.15 | 0.15 | 0.15 |
| | Bulk foaming ratio | | - | 8.9 | 7.8 | 8.8 | 8.8 | 8.8 |
| | Open cell ratio | | % | 3.4 | 4.5 | 4.2 | 4.5 | 2.2 |
| | Crystallinity | | % | 4.6 | 4.0 | 4.6 | 3.3 | 3.6 |
| | Glass transition temperature (Tg) | | °C | 92.1 | 91.2 | 94.5 | 93.8 | 93.3 |
| | Phosphorus content | | % by mass | 0.44 | 0.66 | 0.31 | 0.44 | 0.22 |
| | Average molecular weight | Mn | × 1000 | 19 | 19 | 19 | 20 | 19 |
| | | Mw | × 1000 | 105 | 100 | 100 | 99 | 95 |
| | | Mz | × 1000 | 485 | 473 | 460 | 475 | 476 |
| | | Mw/Mn | - | 5.39 | 5.30 | 5.30 | 4.90 | 5.10 |

(continued)

| | | | | Example 1 | Example 2 | Example 3 | Example 4 | Example 5 |
|---|---|---|---|---|---|---|---|---|
| Molding conditions | One-side heating | Vapor pressure | MPa | 0.30 | 0.30 | 0.30 | 0.30 | 0.30 |
| | | Heating time | Seconds | 60 | 60 | 60 | 60 | 60 |
| | Reverse one-side heating | Vapor pressure | MPa | 0.30 | 0.30 | 0.30 | 0.30 | 0.30 |
| | | Heating time | Seconds | 45 | 45 | 45 | 45 | 45 |
| | Double-side heating | Vapor pressure | MPa | 0.33 | 0.33 | 0.33 | 0.33 | 0.33 |
| | | Heating time | Seconds | 60 | 60 | 60 | 60 | 60 |
| | Heat retention step | Heat retention time | Seconds | 110 | 110 | 110 | 110 | 110 |
| Physical properties of molded body of foamed particles | Density | | $g/cm^3$ | 0.17 | 0.19 | 0.17 | 0.17 | 0.17 |
| | Foaming ratio | | - | 8.1 | 7.1 | 8.0 | 8.0 | 8.0 |
| | Crystallinity | | % | 16.2 | 15.4 | 14.8 | 14.3 | 14.4 |
| | Glass transition temperature (Tg) | | °C | 92.1 | 91.2 | 94.5 | 93.8 | 93.3 |
| | Phosphorus content | | % by mass | 0.44 | 0.66 | 0.31 | 0.44 | 0.22 |
| | Average molecular weight | Mn | × 1000 | 19 | 19 | 19 | 20 | 19 |
| | | Mw | × 1000 | 105 | 100 | 100 | 99 | 95 |
| | | Mz | × 1000 | 485 | 473 | 460 | 475 | 476 |
| | | Mw/Mn | - | 5.39 | 5.30 | 5.30 | 4.90 | 5.10 |
| Evaluation | Moldability | | - | A | A | A | A | A |
| | Burning test | | - | V-0 | V-0 | V-0 | V-0 | V-1 |
| | Flame retardance | | - | A | A | A | A | B |
| | Dimensional change rate under heat | | - | A | A | A | A | A |
| | Overall evaluation | | - | A | A | A | A | B |

[Table 3]

| | | | | Example 6 | Example 7 | Example 8 | Example 9 |
|---|---|---|---|---|---|---|---|
| Raw material | PET | (A) | Parts by mass | 60.9 | 47.9 | 67.9 | 77.9 |
| | | (B) | Parts by mass | - | - | - | - |
| | PEI | (A) | Parts by mass | 30.0 | 30.0 | 20.0 | 10.0 |
| | Nucleating agent MB | PET | Parts by mass | 1.0 | 1.0 | 1.0 | 1.0 |
| | | Talc | Parts by mass | 0.76 | 0.76 | 0.76 | 0.76 |
| | Flame retardant (a) | | Parts by mass | 7.0 | 20 | 10 | 10 |
| | Flame retardant (b) | | Parts by mass | - | - | - | - |
| | Flame retardant (c) | | Parts by mass | - | - | - | - |
| | PMDA | | Parts by mass | 0.34 | 0.34 | 0.28 | 0.28 |
| | Butane | | Parts by mass | 1.2 | 1.3 | 1.0 | 1.0 |
| Physical properties of foamed particles | Bulk density | | $g/cm^3$ | 0.15 | 0.20 | 0.14 | 0.14 |
| | Bulk foaming ratio | | - | 8.9 | 6.6 | 9.5 | 9.6 |
| | Open cell ratio | | % | 2.0 | 7.8 | 2.1 | 1.8 |
| | Crystallinity | | % | 3.1 | 3.5 | 4.1 | 4.2 |
| | Glass transition temperature (Tg) | | °C | 93.5 | 90.7 | 89.2 | 87.8 |
| | Phosphorus content | | % by mass | 0.31 | 0.88 | 0.44 | 0.44 |
| | Average molecular weight | Mn | × 1000 | 20 | 20 | 20 | 19 |
| | | Mw | × 1000 | 107 | 105 | 101 | 104 |
| | | Mz | × 1000 | 485 | 418 | 360 | 395 |
| | | Mw/Mn | - | 5.50 | 5.20 | 5.00 | 5.20 |
| Molding conditions | One-side heating | Vapor pressure | MPa | 0.30 | 0.30 | 0.15 | 0.10 |
| | | Heating time | Seconds | 60 | 60 | 60 | 60 |
| | Reverse one-side heating | Vapor pressure | MPa | 0.30 | 0.30 | 0.15 | 0.10 |
| | | Heating time | Seconds | 45 | 45 | 45 | 45 |
| | Double-side heating | Vapor pressure | MPa | 0.33 | 0.33 | 0.20 | 0.15 |
| | | Heating time | Seconds | 60 | 60 | 60 | 60 |
| | I leat retention step | Heat retention time | Seconds | 110 | 110 | 110 | 110 |

(continued)

| | | | | Example 6 | Example 7 | Example 8 | Example 9 |
|---|---|---|---|---|---|---|---|
| Physical properties of molded body of foamed particles | Density | | $g/cm^3$ | 0.17 | 0.22 | 0.15 | 0.15 |
| | Foaming ratio | | - | 8.1 | 6.0 | 8.7 | 8.7 |
| | Crystallinity | | % | 17.0 | 15.2 | 18.9 | 22.1 |
| | Glass transition temperature (Tg) | | °C | 93.5 | 90.7 | 89.2 | 87.8 |
| | Phosphorus content | | % by mass | 0.31 | 0.88 | 0.44 | 0.44 |
| | Average molecular weight | Mn | × 1000 | 20 | 20 | 20 | 19 |
| | | Mw | × 1000 | 107 | 105 | 101 | 104 |
| | | Mz | × 1000 | 485 | 418 | 360 | 395 |
| | | Mw/Mn | - | 5.50 | 5.20 | 5.00 | 5.20 |
| Evaluation | Moldability | | - | A | B | A | A |
| | Burning test | | - | V-1 | V-0 | V-2 | V-2 |
| | Flame retardance | | - | B | A | C | C |
| | Dimensional change rate under heat | | - | A | A | A | A |
| | Overall evaluation | | - | B | B | C | C |

[Table 4]

| | | | | Comparative Example 1 | Comparative Example 2 | Comparative Example 3 | Comparative Example 4 |
|---|---|---|---|---|---|---|---|
| Raw material | PET | (A) | Parts by mass | 67.9 | 57.8 | 37.9 | 42.8 |
| | | (B) | Parts by mass | - | - | - | - |
| | PEI | (A) | Parts by mass | 30.0 | 40.0 | 30.0 | 50.0 |
| | Nucleating agent MB | PET | Parts by mass | 1.0 | 1.0 | 1.0 | 1.0 |
| | | Talc | Parts by mass | 0.76 | 0.76 | 0.76 | 0.76 |
| | Flame retardant (a) | | Parts by mass | - | - | 30 | 5.0 |
| | Flame retardant (b) | | Parts by mass | - | - | - | - |
| | Flame retardant (c) | | Parts by mass | - | - | - | - |
| | PMDA | | Parts by mass | 0.34 | 0.36 | 0.34 | 0.40 |
| | Butane | | Parts by mass | 1.2 | 1.2 | 1.2 | 1.3 |

(continued)

| | | | | Comparative Example 1 | Comparative Example 2 | Comparative Example 3 | Comparative Example 4 |
|---|---|---|---|---|---|---|---|
| Physical properties of foamed particles | Bulk density | | g/cm$^3$ | 0.15 | 0.15 | 0.22 | 0.21 |
| | Bulk foaming ratio | | - | 8.9 | 8.8 | 6.0 | 6.3 |
| | Open cell ratio | | % | 2.3 | 2.0 | 14.1 | 4.5 |
| | Crystallinity | | % | 3.3 | 3.5 | 3.2 | 4.4 |
| | Glass transition temperature (Tg) | | °C | 92.8 | 94.1 | 89.2 | 105.0 |
| | Phosphorus content | | % by mass | 0 | 0 | 1.32 | 0.22 |
| | Average molecular weight | Mn | × 1000 | 19 | 20 | 19 | 18 |
| | | Mw | × 1000 | 101 | 99 | 102 | 98 |
| | | Mz | × 1000 | 483 | 451 | 398 | 404 |
| | | Mw/Mn | - | 5.30 | 4.90 | 5.40 | 5.40 |
| Molding conditions | One-side heating | Vapor pressure | MPa | 0.30 | 0.30 | 0.30 | 0.30 |
| | | Heating time | Seconds | 60 | 60 | 60 | 60 |
| | Reverse one-side heating | Vapor pressure | MPa | 0.30 | 0.30 | 0.30 | 0.30 |
| | | Heating time | Seconds | 45 | 45 | 45 | 45 |
| | Double-side heating | Vapor pressure | MPa | 0.33 | 0.33 | 0.33 | 0.33 |
| | | Heating time | Seconds | 60 | 60 | 60 | 60 |
| | Heat retention step | Heat retention time | Seconds | 110 | 110 | 110 | 110 |
| Physical properties of molded body of foamed particles | Density | | g/cm$^3$ | 0.17 | 0.17 | 0.24 | 0.23 |
| | Foaming ratio | | - | 8.1 | 8.0 | 5.5 | 5.7 |
| | Crystallinity | | % | 17.3 | 14.8 | 14.4 | 9.1 |
| | Glass transition temperature (Tg) | | °C | 92.8 | 94.1 | 89.2 | 105.0 |
| | Phosphorus content | | % by mass | 0 | 0 | 1.32 | 0.22 |
| | Average molecular weight | Mn | × 1000 | 19 | 20 | 19 | 18 |
| | | Mw | × 1000 | 101 | 99 | 102 | 98 |
| | | Mz | × 1000 | 483 | 451 | 398 | 404 |
| | | Mw/Mn | - | 5.30 | 4.90 | 5.40 | 5.40 |

(continued)

| | | | Comparative Example 1 | Comparative Example 2 | Comparative Example 3 | Comparative Example 4 |
|---|---|---|---|---|---|---|
| Evaluation | Moldability | - | A | A | D | D |
| | Burning test | - | Incompatible | Incompatible | - | - |
| | Flame retardance | - | D | D | - | - |
| | Dimensional change rate under heat | - | A | A | - | - |
| | Overall evaluation | - | D | D | D | D |

[Table 5]

| | | | | Example 10 | Example 11 | Example 12 | Example 13 |
|---|---|---|---|---|---|---|---|
| Raw material | PET | (A) | Parts by mass | 62.9 | 52.9 | 57.8 | 52.8 |
| | | (B) | Parts by mass | - | - | - | - |
| | PEI | (A) | Parts by mass | 25.0 | 35.0 | 30.0 | 30.0 |
| | Nucleating agent MB | PET | Parts by mass | 1.0 | 1.0 | 1.0 | 1.0 |
| | | Talc | Parts by mass | 0.76 | 0.76 | 0.76 | 0.76 |
| | Flame retardant (a) | | Parts by mass | 10 | 10 | - | - |
| | Flame retardant (b) | | Parts by mass | - | - | 10 | 15 |
| | Flame retardant (c) | | Parts by mass | - | - | - | - |
| | PMDA | | Parts by mass | 0.30 | 0.34 | 0.36 | 0.36 |
| | Butane | | Parts by mass | 1.1 | 1.3 | 1.3 | 1.3 |
| Physical properties of foamed particles | Bulk density | | $g/cm^3$ | 0.15 | 0.15 | 0.15 | 0.16 |
| | Bulk foaming ratio | | - | 8.9 | 8.9 | 8.8 | 8.4 |
| | Open cell ratio | | % | 7.2 | 15.1 | 7.6 | 8.8 |
| | Crystallinity | | % | 5.1 | 4.9 | 4.7 | 6.3 |
| | Glass transition temperature (Tg) | | °C | 90.1 | 93.2 | 92.8 | 91.5 |
| | Phosphorus content | | % by mass | 0.44 | 0.44 | 0.30 | 0.45 |
| | Average molecular weight | Mn | × 1000 | 21 | 21 | 20 | 20 |
| | | Mw | × 1000 | 93 | 90 | 98 | 95 |
| | | Mz | × 1000 | 364 | 350 | 457 | 481 |
| | | Mw/Mn | - | 4.43 | 4.29 | 4.90 | 4.75 |

(continued)

| | | | | Example 10 | Example 11 | Example 12 | Example 13 |
|---|---|---|---|---|---|---|---|
| Molding conditions | One-side heating | Vapor pressure | MPa | 0.25 | 0.30 | 0.30 | 0.30 |
| Molding conditions | One-side heating | Heating time | Seconds | 60 | 60 | 60 | 60 |
| Molding conditions | Reverse one-side heating | Vapor pressure | MPa | 0.25 | 0.30 | 0.30 | 0.30 |
| Molding conditions | Reverse one-side heating | Heating time | Seconds | 60 | 60 | 60 | 60 |
| Molding conditions | Double-side heating | Vapor pressure | MPa | 0.30 | 0.33 | 0.33 | 0.33 |
| Molding conditions | Double-side heating | Heating time | Seconds | 60 | 60 | 60 | 60 |
| Molding conditions | Heat retention step | Heat retention time | Seconds | 110 | 110 | 110 | 110 |
| Physical properties of molded body of foamed particles | Density | | $g/cm^3$ | 0.17 | 0.17 | 0.17 | 0.19 |
| Physical properties of molded body of foamed particles | Foaming ratio | | - | 8.1 | 8.0 | 8.0 | 7. t |
| Physical properties of molded body of foamed particles | Crystallinity | | % | 18.1 | 16.2 | 16.9 | 16.2 |
| Physical properties of molded body of foamed particles | Glass transition temperature (Tg) | | °C | 90.1 | 93.2 | 92.8 | 91.5 |
| Physical properties of molded body of foamed particles | Phosphorus content | | % by mass | 0.44 | 0.44 | 0.30 | 0.45 |
| Physical properties of molded body of foamed particles | Average molecular weight | Mn | × 1000 | 21 | 21 | 20 | 20 |
| Physical properties of molded body of foamed particles | Average molecular weight | Mw | × 1000 | 93 | 90 | 98 | 95 |
| Physical properties of molded body of foamed particles | Average molecular weight | Mz | × 1000 | 364 | 350 | 457 | 481 |
| Physical properties of molded body of foamed particles | Average molecular weight | Mw/Mn | - | 4.43 | 4.29 | 4.90 | 4.75 |
| Evaluation | Moldability | | - | A | A | A | A |
| Evaluation | Burning test | | - | V-2 | V-0 | V-0 | V-0 |
| Evaluation | Flame retardance | | - | C | A | A | A |
| Evaluation | Dimensional change rate under heat | | - | A | A | A | A |
| Evaluation | Overall evaluation | | - | C | A | A | A |

[Table 6]

| | | | | Example 14 | Example 15 | Example 16 | Example 17 |
|---|---|---|---|---|---|---|---|
| Raw material | PET | (A) | Parts by mass | 47.8 | 65.8 | 64.8 | 63.8 |
| | | (B) | Parts by mass | - | - | - | - |
| | PEI | (A) | Parts by mass | 30.0 | 30.0 | 30.0 | 30.0 |
| | Nucleating agent MB | PET | Parts by mass | 1.0 | 1.0 | 1.0 | 1.0 |
| | | Talc | Parts by mass | 0.76 | 0.76 | 0.76 | 0.76 |
| | Flame retardant (a) | | Parts by mass | - | - | - | - |
| | Flame retardant (b) | | Parts by mass | 20 | - | - | - |
| | Flame retardant (c) | | Parts by mass | - | 2.0 | 3.0 | 4.0 |
| | PMDA | | Parts by mass | 0.36 | 0.36 | 0.38 | 0.40 |
| | Butane | | Parts by mass | 1.3 | 1.3 | 1.2 | 1.2 |
| Physical properties of foamed particles | Bulk density | | $g/cm^3$ | 0.16 | 0.15 | 0.17 | 0.20 |
| | Bulk foaming ratio | | - | 8.4 | 8.9 | 7.8 | 6.6 |
| | Open cell ratio | | % | 10.4 | 8.3 | 11.5 | 15.1 |
| | Crystallinity | | % | 7.1 | 5.8 | 6.1 | 4.8 |
| | Glass transition temperature (Tg) | | °C | 90.5 | 92.3 | 91.1 | 90.8 |
| | Phosphorus content | | % by mass | 0.60 | 0.30 | 0.45 | 0.60 |
| | Average molecular weight | Mn | × 1000 | 20 | 20 | 19 | 18 |
| | | Mw | × 1000 | 100 | 98 | 101 | 112 |
| | | Mz | × 1000 | 469 | 470 | 468 | 487 |
| | | Mw/Mn | - | 5.00 | 4.90 | 5.32 | 6.22 |
| Molding conditions | One-side heating | Vapor pressure | MPa | 0.30 | 0.30 | 0.30 | 0.30 |
| | | Heating time | Seconds | 60 | 60 | 60 | 60 |
| | Reverse one-side heating | Vapor pressure | MPa | 0.30 | 0.30 | 0.30 | 0.30 |
| | | Heating time | Seconds | 60 | 60 | 60 | 60 |
| | Double-side heating | Vapor pressure | MPa | 0.33 | 0.33 | 0.33 | 0.33 |
| | | Heating time | Seconds | 60 | 60 | 60 | 60 |
| | Heat retention step | Heat retention time | Seconds | 110 | 110 | 110 | 110 |

(continued)

| | | | | Example 14 | Example 15 | Example 16 | Example 17 |
|---|---|---|---|---|---|---|---|
| Physical properties of molded body of foamed particles | Density | | $g/cm^3$ | 0.18 | 0.17 | 0.20 | 0.22 |
| | Foaming ratio | | - | 7.5 | 7.9 | 6.7 | 6.1 |
| | Crystallinity | | % | 15.5 | 17.5 | 16.6 | 15.2 |
| | Glass transition temperature (Tg) | | °C | 90.5 | 92.3 | 91.1 | 90.8 |
| | Phosphorus content | | % by mass | 0.60 | 0.30 | 0.45 | 0.60 |
| | Average molecular weight | Mn | × 1000 | 20 | 20 | 19 | 18 |
| | | Mw | × 1000 | 100 | 98 | 101 | 112 |
| | | Mz | × 1000 | 469 | 470 | 468 | 487 |
| | | Mw/Mn | - | 5.00 | 4.90 | 5.32 | 6.22 |
| Evaluation | Moldability | | - | B | A | B | B |
| | Burning test | | - | V-0 | V-0 | V-0 | V-0 |
| | Flame retardance | | - | A | A | A | A |
| | Dimensional change rate under heat | | - | A | A | A | B |
| | Overall evaluation | | - | B | A | B | B |

[Table 7]

| | | | | Example 18 | Example 19 | Example 20 |
|---|---|---|---|---|---|---|
| Raw material | PET | (A) | Parts by mass | - | - | - |
| | | (B) | Parts by mass | 57.9 | 52.8 | 64.8 |
| | PEI | (A) | Parts by mass | 30.0 | 30.0 | 30.0 |
| | Nucleating agent MB | PET | Parts by mass | 1.0 | 1.0 | 1.0 |
| | | Talc | Parts by mass | 0.76 | 0.76 | 0.76 |
| | Flame retardant (a) | | Parts by mass | 10 | - | - |
| | Flame retardant (b) | | Parts by mass | - | 15 | - |
| | Flame retardant (c) | | Parts by mass | - | - | 3.0 |
| | PMDA | | Parts by mass | 0.34 | 0.36 | 0.38 |
| | Butane | | Parts by mass | 1.2 | 1.3 | 1.2 |
| Physical properties of foamed particles | Bulk density | | $g/cm^3$ | 0.15 | 0.16 | 0.17 |
| | Bulk foaming ratio | | - | 8.9 | 8.4 | 7.8 |
| | Open cell ratio | | % | 3.4 | 8.8 | 11.5 |
| | Crystallinity | | % | 4.6 | 6.3 | 6.1 |
| | Glass transition temperature (Tg) | | °C | 92.1 | 91.5 | 91.1 |
| | Phosphorus content | | % by mass | 0.44 | 0.45 | 0.45 |
| | Average molecular weight | Mn | × 1000 | 19 | 20 | 19 |
| | | Mw | × 1000 | 105 | 95 | 101 |
| | | Mz | × 1000 | 485 | 481 | 468 |
| | | Mw/Mn | - | 5.39 | 4.75 | 5.32 |

(continued)

| | | | | Example 18 | Example 19 | Example 20 |
|---|---|---|---|---|---|---|
| Molding conditions | One-side heating | Vapor pressure | MPa | 0.30 | 0.30 | 0.30 |
| | | Heating time | Seconds | 60 | 60 | 60 |
| | Reverse one-side heating | Vapor pressure | MPa | 0.30 | 0.30 | 0.30 |
| | | Heating time | Seconds | 45 | 60 | 60 |
| | Double-side heating | Vapor pressure | MPa | 0.33 | 0.33 | 0.33 |
| | | Heating time | Seconds | 60 | 60 | 60 |
| | Heat retention step | Heat retention time | Seconds | 110 | 110 | 110 |
| Physical properties of molded body of foamed particles | Density | | $g/cm^3$ | 0.17 | 0.19 | 0.20 |
| | Foaming ratio | | - | 8.1 | 7.1 | 6.7 |
| | Crystallinity | | % | 16.0 | 16.2 | 15.9 |
| | Glass transition temperature (Tg) | | °C | 91.0 | 90.8 | 90.5 |
| | Phosphorus content | | % by mass | 0.44 | 0.45 | 0.45 |
| | Average molecular weight | Mn | × 1000 | 19 | 20 | 19 |
| | | Mw | × 1000 | 103 | 95 | 101 |
| | | Mz | × 1000 | 483 | 479 | 468 |
| | | Mw/Mn | - | 5.39 | 4.75 | 5.32 |
| Evaluation | Moldability | | - | A | A | B |
| | Burning test | | - | V-0 | V-0 | V-0 |
| | Flame retardance | | - | A | A | A |
| | Dimensional change rate under heat | | - | A | A | A |
| | Overall evaluation | | - | A | A | B |

In Examples 1 to 20 to which the present invention was applied, the results of the burning test were V-0 to V-2, and the overall evaluations were "A" to "C".

In Comparative Examples 1 and 2 that did not contain the phosphorus-based flame retardant, the results of the burning test were below the required level, and the evaluation for the flame retardance was "D".

In Comparative Example 3 in which the phosphorus content was 1.32% by mass, and in Comparative Example 4 in which the amount of the polyimide-based resin with respect to the total mass of the thermoplastic resin was 50% by mass, the moldability was "D".

From the above results, it was verified that, by applying the present invention, flame retardance and heat resistance are enhanced, and moldability of the molded body of foamed particles is enhanced.

For the foamed thermoplastic resin particles obtained in Example 1, Example 3, and Example 6, the proportion of the polyimide-based resin with respect to the total mass of the thermoplastic resin was measured by the method described in the above-described section "[Method for measuring proportion of polyimide-based resin]". The results are shown in Table 8.

[Table 8]

| | Example 1 | Example 3 | Example 6 |
|---|---|---|---|
| Proportion of polyimide-based resin (% by mass) | 37.5 | 48.7 | 37.2 |

REFERENCE SIGNS LIST

100 Foamed resin composite

102 Molded body of foamed particles
104 Fiber-reinforced resin layer

## Claims

1. Foamed thermoplastic resin particles comprising a thermoplastic resin,

   wherein the thermoplastic resin includes a polyester-based resin, a polyimide-based resin, and a phosphorus-based flame retardant,
   an amount of the polyimide-based resin is 5% to 45% by mass with respect to a total mass of the thermoplastic resin, and
   an amount of phosphorus is 0.15% to 1.00% by mass with respect to the total mass of the thermoplastic resin.

2. The foamed thermoplastic resin particles according to Claim 1, wherein the amount of the polyimide-based resin is 25% to 45% by mass with respect to the total mass of the thermoplastic resin.

3. The foamed thermoplastic resin particles according to Claim 1 or 2, which has a glass transition temperature Tg of 80°C to 130°C.

4. A molded body of foamed thermoplastic resin particles, comprising a thermoplastic resin and formed by two or more foamed thermoplastic resin particles that are thermally fusion-bonded with each other,

   wherein the thermoplastic resin includes a polyester-based resin, a polyimide-based resin, and a phosphorus-based flame retardant,
   an amount of the polyimide-based resin is 5% to 45% by mass with respect to a total mass of the thermoplastic resin, and
   an amount of phosphorus is 0.15% to 1.00% by mass with respect to the total mass of the thermoplastic resin.

5. The molded body according to Claim 4, wherein flame retardance measured in accordance with a UL-94 vertical method (11 mm vertical burning test) of UL standards is V-0, V-1, or V-2.

6. The molded body according to Claim 4, wherein the amount of the polyimide-based resin is 25% to 45% by mass with respect to the total mass of the thermoplastic resin.

7. The molded body according to Claim 6, wherein flame retardance measured in accordance with UL-94 vertical method (11 mm vertical burning test) of UL standards is V-0 or V-1.

8. The molded body according to any one of Claims 4 to 7, which has a glass transition temperature Tg is 80°C to 130°C.

9. A foamed resin composite comprising:

   the molded body of any one of Claims 4 to 7; and
   a fiber-reinforced resin layer provided on at least a portion of a surface of the molded body of foamed thermoplastic resin particles.

10. A method for producing foamed thermoplastic resin particles, the method comprising:

    a step of extruding a thermoplastic resin composition containing a thermoplastic resin and a foaming agent, and foaming the thermoplastic resin composition to obtain foamed thermoplastic resin particles,
    wherein the thermoplastic resin contains a polyester-based resin, a polyimide-based resin, and a phosphorus-based flame retardant,
    an amount of the polyimide-based resin is 5% to 45% by mass with respect to a total mass of the thermoplastic resin, and

an amount of phosphorus is 0.15% to 1.00% by mass with respect to the total mass of the thermoplastic resin.

**11.** The method for producing foamed thermoplastic resin particles according to Claim 10, wherein the amount of the polyimide-based resin is 25% to 45% by mass with respect to the total mass of the thermoplastic resin.

**12.** A method for producing a molded body of foamed thermoplastic resin particles, the method comprising:

obtaining the foamed thermoplastic resin particles by the method of Claim 10 or 11,
filling a cavity of a mold with the obtained foamed thermoplastic resin particles,
heating the foamed thermoplastic resin particles in the cavity to obtain secondary foamed particles, and
thermally fusion-bonding the secondary foamed particles to obtain the molded body of foamed thermoplastic resin particles.

**13.** A cell case or a battery case, comprising the molded body of any one of Claims 4 to 8.

FIG. 1

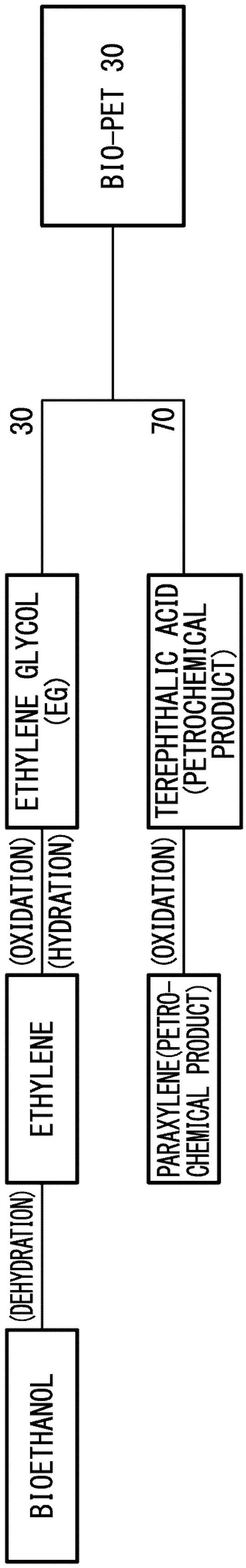
BIOETHANOL
(DEHYDRATION)
ETHYLENE
(OXIDATION)
(HYDRATION)
ETHYLENE GLYCOL (EG)
30
PARAXYLENE(PETRO-CHEMICAL PRODUCT)
(OXIDATION)
TEREPHTHALIC ACID (PETROCHEMICAL PRODUCT)
70
BIO-PET 30

FIG. 2

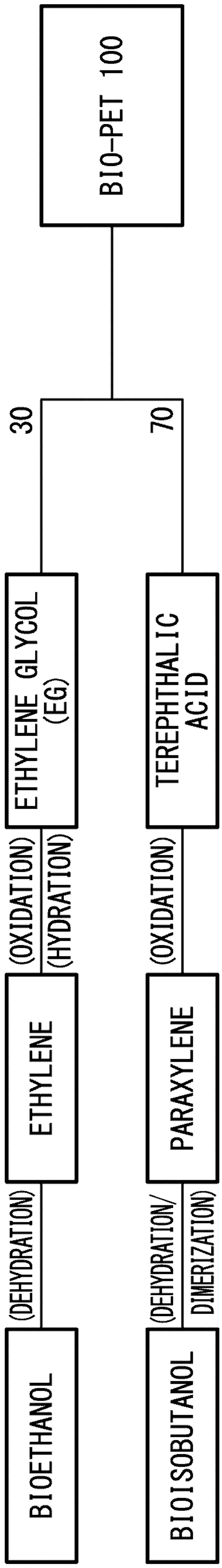
BIOETHANOL
(DEHYDRATION)
ETHYLENE
(OXIDATION)
(HYDRATION)
ETHYLENE GLYCOL (EG)
30
BIOISOBUTANOL
(DEHYDRATION/ DIMERIZATION)
PARAXYLENE
(OXIDATION)
TEREPHTHALIC ACID
70
BIO-PET 100

FIG. 3

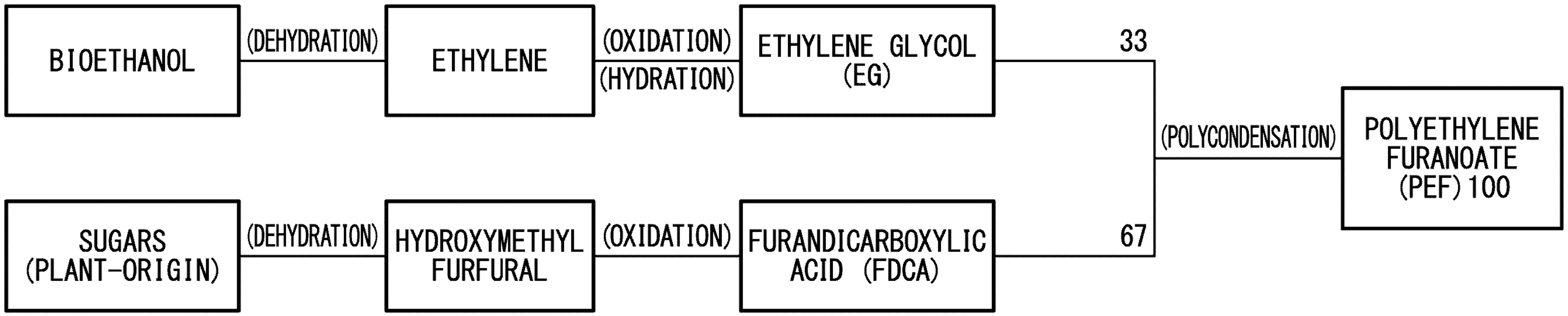
BIOETHANOL
(DEHYDRATION)
ETHYLENE
(OXIDATION)
(HYDRATION)
ETHYLENE GLYCOL (EG)
33
SUGARS (PLANT-ORIGIN)
(DEHYDRATION)
HYDROXYMETHYL FURFURAL
(OXIDATION)
FURANDICARBOXYLIC ACID (FDCA)
67
(POLYCONDENSATION)
POLYETHYLENE FURANOATE (PEF) 100

FIG. 4

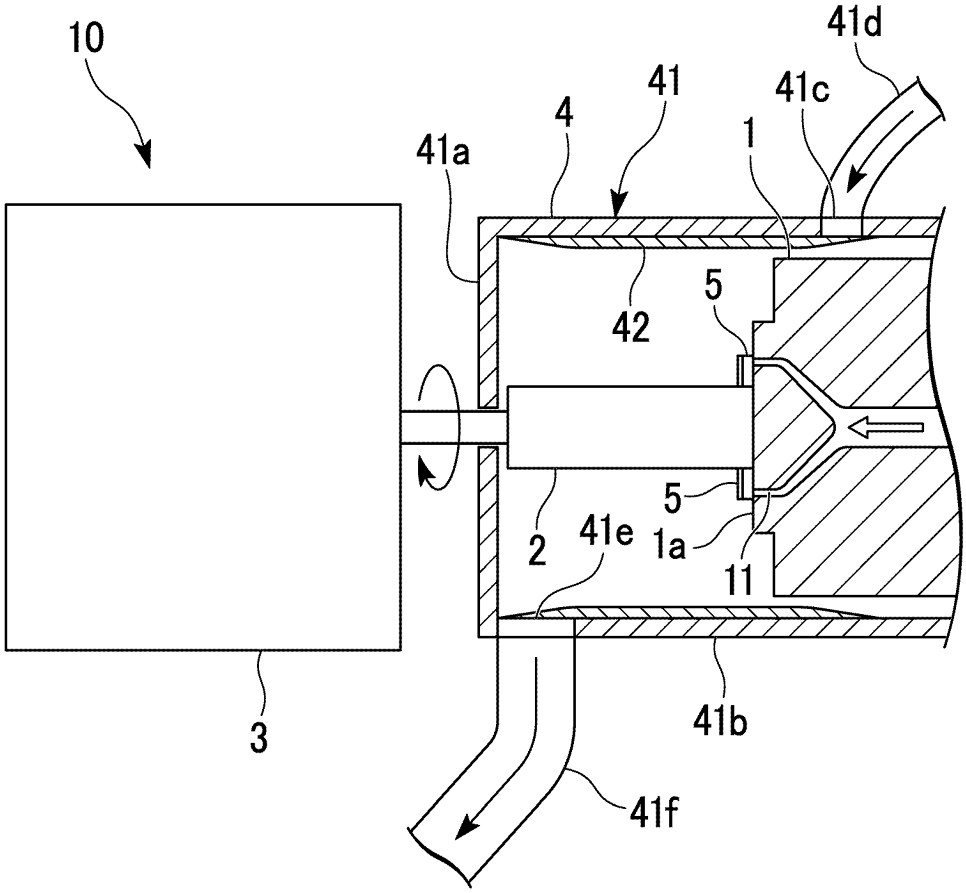


FIG. 5

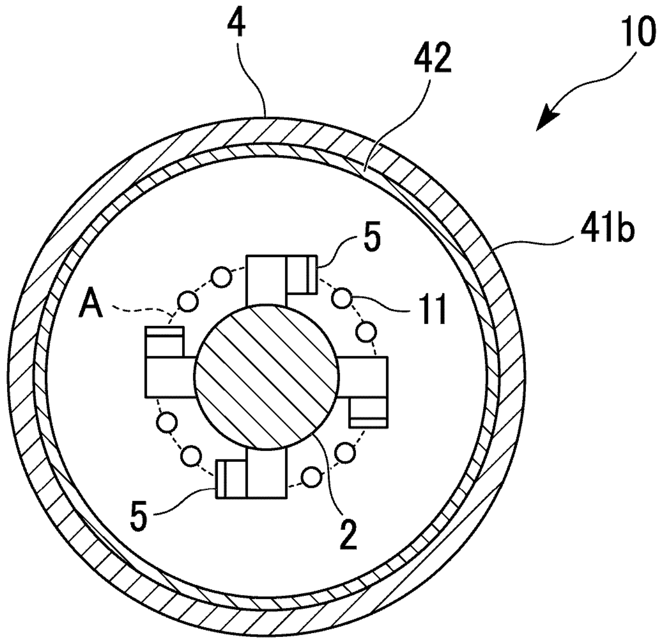

FIG. 6

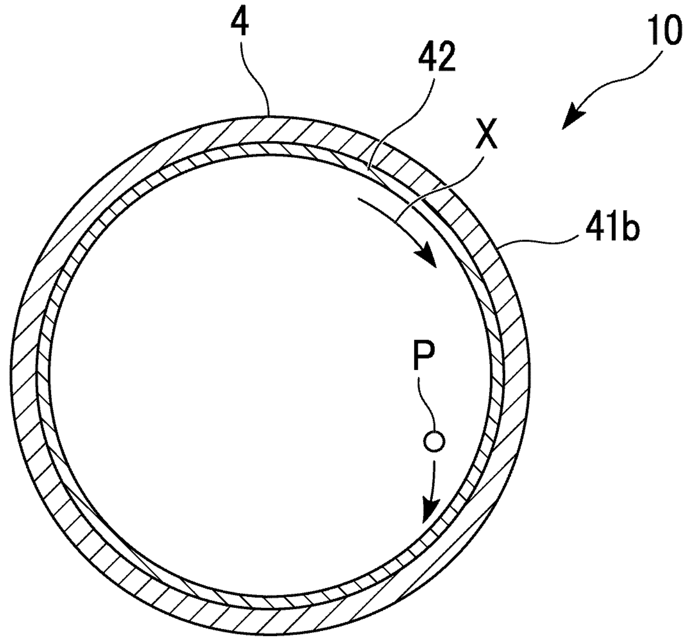


FIG. 7

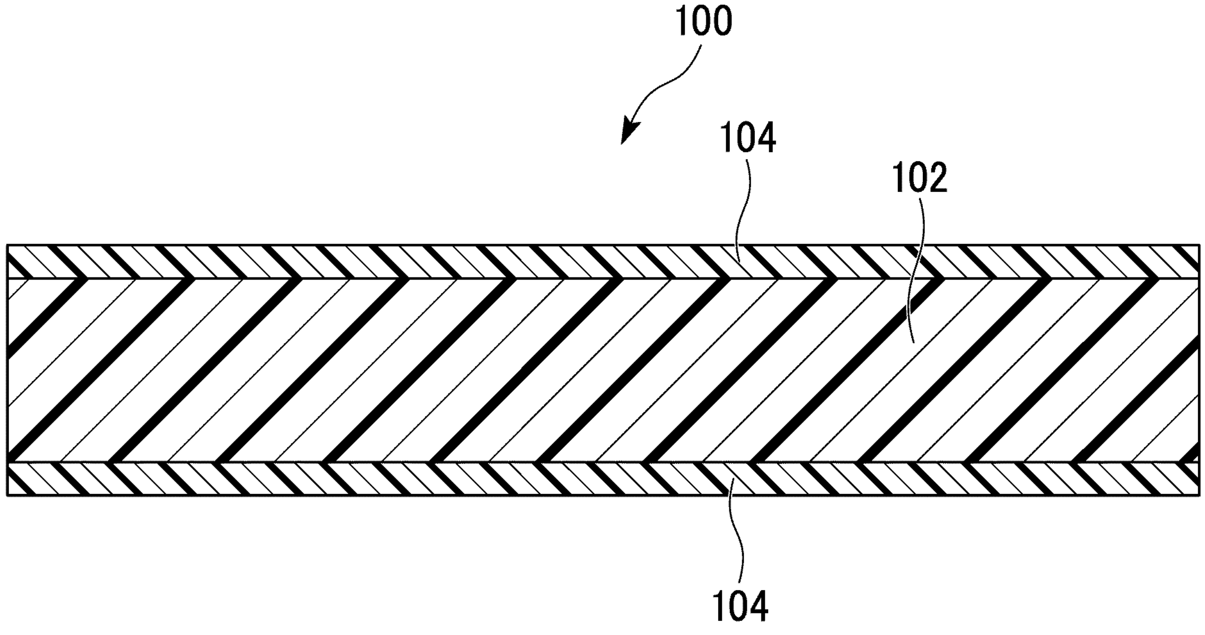

**INTERNATIONAL SEARCH REPORT**

International application No.
**PCT/JP2023/021721**

**A. CLASSIFICATION OF SUBJECT MATTER**

***C08J 9/16***(2006.01)i; ***C08K 3/32***(2006.01)i; ***C08K 5/49***(2006.01)i; ***C08L 67/00***(2006.01)i; ***C08L 79/04***(2006.01)i
FI: C08J9/16 CFG; C08K3/32; C08K5/49; C08L67/00; C08L79/04

According to International Patent Classification (IPC) or to both national classification and IPC

**B. FIELDS SEARCHED**

Minimum documentation searched (classification system followed by classification symbols)

C08J9/00 - 9/42, B29C44/00 - 44/60, B29C67/20, C08K3/00 - 13/08, C08L1/00 - 101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-057468 A (SEKISUI PLASTICS CO., LTD.) 11 April 2022 (2022-04-11) entire text | 1-13 |
| A | JP 2008-504428 A (GENERAL ELECTRIC CO.) 14 February 2008 (2008-02-14) entire text | 1-13 |
| A | JP 2001-040229 A (TORAY IND., INC.) 13 February 2001 (2001-02-13) entire text | 1-13 |
| A | JP 08-176173 A (GENERAL ELECTRIC CO.) 09 July 1996 (1996-07-09) entire text | 1-13 |
| A | JP 2003-519132 A (CIBA SPECIALTY CHEMICALS HOLDING INC.) 17 June 2003 (2003-06-17) entire text | 1-13 |
| A | JP 2017-133007 A (SEKISUI CHEM. CO., LTD.) 03 August 2017 (2017-08-03) entire text | 1-13 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 June 2023** | **11 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2023/021721

C. DOCUMENTS CONSIDERED TO BE RELEVANT

| Category* | Citation of document, with indication, where appropriate, of the relevant passages | Relevant to claim No. |
|---|---|---|
| A | JP 2019-501264 A (HANWHA AZDEL, INC.) 17 January 2019 (2019-01-17) entire text | 1-13 |
| A | JP 08-113545 A (CIBA GEIGY AG) 07 May 1996 (1996-05-07) entire text | 1-13 |
| A | JP 2008-531353 A (EASTMAN CHEMICAL CO.) 14 August 2008 (2008-08-14) entire text | 1-13 |
| A | US 2018/0345575 A1 (NIKE, INC.) 06 December 2018 (2018-12-06) whole document | 1-13 |
| A | CN 112358649 A (AEROSPACE RESEARCH INSTITUTE OF MATERIALS AND PROCESSING TECHNOLOGY) 12 February 2021 (2021-02-12) whole document | 1-13 |

Form PCT/ISA/210 (second sheet) (January 2015)

**INTERNATIONAL SEARCH REPORT**
**Information on patent family members**

International application No.
**PCT/JP2023/021721**

| Patent document cited in search report | Publication date (day/month/year) | Patent family member(s) | Publication date (day/month/year) |
|---|---|---|---|
| JP 2022-057468 A | 11 April 2022 | WO 2022/025274 A1<br>entire text<br>EP 4190533 A1<br>whole document | |
| JP 2008-504428 A | 14 February 2008 | US 2005/0288406 A1<br>whole document<br>WO 2006/012250 A1<br>whole document<br>EP 1763561 A1<br>whole document | |
| JP 2001-040229 A | 13 February 2001 | (Family: none) | |
| JP 08-176173 A | 09 July 1996 | US 5424348 A<br>whole document<br>EP 635514 A1<br>whole document | |
| JP 2003-519132 A | 17 June 2003 | US 2003/0096993 A1<br>whole document<br>WO 2001/047900 A1<br>whole document<br>EP 1242391 A1<br>whole document | |
| JP 2017-133007 A | 03 August 2017 | JP 2019-178327 A<br>entire text<br>JP 2021-102769 A<br>entire text | |
| JP 2019-501264 A | 17 January 2019 | US 2017/0225429 A1<br>whole document<br>WO 2017/120171 A1<br>whole document<br>EP 3400135 A1<br>whole document | |
| JP 08-113545 A | 07 May 1996 | US 5672574 A<br>whole document<br>EP 705870 A2<br>whole document | |
| JP 2008-531353 A | 14 August 2008 | WO 2006/094133 A1<br>whole document | |
| US 2018/0345575 A1 | 06 December 2018 | EP 3576563 A1<br>whole document | |
| CN 112358649 A | 12 February 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022094483 A
- JP 2022057468 A
- WO 2011019057 A
- JP 2006249158 A
- JP 2000063553 A
- US 4141927 A
- JP 2622678 B
- JP 2606912 B
- JP 2606914 B
- JP 2596565 B
- JP 2596566 B
- JP 2598478 B
- JP 2598536 B
- JP 2599171 B
- JP H948852 A
- JP 2565556 B
- JP 2564636 B
- JP 2564637 B
- JP 2563548 B
- JP 2563547 B
- JP 2558341 B
- JP 2558339 B
- JP 2834580 B


### Non-patent literature cited in the description


- **AKI HOSOGAI et al.** Material Combustibility Test Intended for Fire Safety Evaluation. *Journal of the Combustion Society of Japan*, 2014, vol. 56 (175), 47-58